# EUROPÄISCHE PATENTANMELDUNG

(11) **EP 2 886 831 A1**
(43) Veröffentlichungstag der Anmeldung: **24.06.2015**
(21) Anmeldenummer: 14174743.6
(22) Anmeldetag: 27.06.2014
(51) Int. Cl.: F02B 63/04, B60K 6/485, F02D 13/02

(54) **Hubkolbenmotor**

(30) Priorität: 20.12.2013 EP 13199214
(71) Anmelder: HVD AG, 9495 Triesen (LI)
(72) Erfinder: Grabher, Karl-Heinz, FL-9490 Vaduz (LI); Schuttenbach Von, Andreas, 85051 Ingolstadt (DE)
(74) Vertreter: Harmann, Bernd-Günther

(57) **Zusammenfassung**

Die Erfindung betrifft einen Hubkolbenmotor mit einer ersten inneren Magnetfeldeinheit (8a; 34), die an einer ersten Kurbelwange (9a) einer Kurbelwelle (3) angeordnet ist, und einer feststehenden ersten äußeren Magnetfeldeinheit (11a; 37), wobei die erste innere Magnetfeldeinheit (8a; 34) und die erste äußere Magnetfeldeinheit gemeinsam einen ersten elektromechanischen Wandler (12a), insbesondere einen Elektromotor oder einen elektrischen Generator, bilden. Die erste Kurbelwange (9a) ist einstückig mit einem ersten Ausgleichsgewicht (14a) ausgebildet oder weist ein erstes Ausgleichsgewicht (14a) auf. Die erste innere Magnetfeldeinheit (8a; 34) ist auf einer in Bezug zu der Kurbelwellenachse (4) radial nach außen weisenden Seite des ersten Ausgleichsgewichts (14a) angeordnet. Die erste innere Magnetfeldeinheit (8a; 34) hat die Form eines die erste Kurbelwange (9a) umgebenden kreisbogenförmigen inneren Ringabschnitts, wobei sich der kreisbogenförmige innere Ringabschnitt mit einem ersten Mittelpunktswinkel (α) von über 135° erstreckt. Außerdem betrifft die Erfindung ein System mit dem Hubkolbenmotor, einem Energiespeicher (21), einer elektrischen Steuerungseinheit (22) und einem Kurbelwellensensor (23).

## Beschreibung

Die vorliegende Erfindung betrifft einen Hubkolbenmotor mit einem elektromechanischen Wandler, der als elektrischer Generator und/oder als Elektromotor betreibbar ist, nach dem Oberbegriff des unabhängigen Anspruchs 1.

In der EP 1 223 316 B1 wird ein Hubkolbenmotor offenbart, in dessen Kurbelkammer ein elektromechanischer Wandler angeordnet ist, der die Funktionen eines Elektromotors und/oder eines elektrischen Generators aufweist. An einer Kurbelwelle, die mittels eines an einem Zylinderblock angebrachten Lagerdeckels drehbar in der Kurbelkammer gehalten ist, sind magnetfelderzeugende Elemente in Form von Permanentmagneten angeordnet. Die Permanentmagnete sind fest durch einen Presssitz in Ausnehmungen der Ausgleichsgewichte der Kurbelwelle eingesetzt und dienen als zusätzliche Ausgleichsgewichte. An dem Lagerdeckel sind in der Kurbelkammer Spulen feststehend gehalten. Bei Rotation der Kurbelwelle drehen sich die Permanentmagnete relativ zu den feststehenden Spulen, wodurch aufgrund der elektromagnetischen Wechselwirkung zwischen den Permanentmagneten und den Spulen eine Spannung in den Spulen induziert wird und der elektromechanische Wandler als ein Generator wirkt. Durch Speisen der Spulen mit einer Wechselspannung, insbesondere von einer Batterie, wird auf die Permanentmagnete eine elektromagnetische Kraft ausgeübt und durch die elektromagnetische Wechselwirkung wirkt der elektromechanische Wandler als ein Elektromotor. Da die Spulen an dem Lagerdeckel gehalten sind, können die Spulen zusammen mit dem Lagerdeckel an dem Zylinderblock angebracht werden und von demselben abgenommen werden, was eine einfache Montage und Demontage oder Austausch der Spulen ermöglicht. Zudem wird beschrieben, dass die Spulen zur besseren Kühlung im Bereich der Ölwanne der Kurbelkammer angeordnet und in das in der Ölwanne enthaltene Öl eingetaucht sind, wodurch eine Kühlung der Spulen durch das Öl ermöglicht wird.

Bei dem aus dem Stand der Technik bekannten Hubkolbenmotor sind die magnetfelderzeugenden Elemente in Form von Permanentmagneten in den Ausgleichsgewichten der Kurbelwelle angeordnet, indem sie mittels Presssitz in Ausnehmungen der Ausgleichsgewichte fixiert sind. Die Anordnung der Permanentmagnete in den vorgesehenen Ausnehmungen der Ausgleichsgewichte hat den Vorteil, dass die Permanentmagnete als zusätzliche Ausgleichsgewichte dienen und somit eine zusätzliche Gewichtszunahme der Kurbelwelle durch die Permanentmagnete gegenüber einer konventionellen Kurbelwelle vermieden werden kann. Diese Anordnung hat jedoch auch mehrere Nachteile. Kurbelwellen sind in der Regel einstückig ausgebildet und werden entweder im Gießverfahren insbesondere aus Kugelgraphitguss, Vergütungs- oder Nitrierstahl gefertigt oder im Druckumformverfahren geschmiedet. Die für Herstellung von hoch belastbaren Kurbelwellen geeigneten Materialen sind in der Regel magnetisierbar. In anderen Worten weisen konventionelle Kurbelwellen ferromagnetische oder ferrimagnetische Eigenschaften auf. Sie werden also vom Magnetpol eines äußeren Magnetfelds angezogen, ohne dass eine hohe Restmagnetisierung zurückbleibt, in anderen Worten sind sie weichmagnetisch, oder sie verursachen selbst nach einer Magnetisierung ein statisches Magnetfeld, da sie hartmagnetisch sind und eine hohe Remanenz aufweisen. Aufgrund dieser magnetisierbaren Eigenschaften eignen sich konventionelle Kurbelwellen nur bedingt zur Anordnung von Permanentmagneten in Ausnehmungen von Ausgleichsgewichten mittels Presssitz, da die Permanentmagnete eine Magnetisierung der gesamten Kurbelwelle hervorrufen und die Erzeugung eines definiert verlaufenden, gerichteten Magnetfeldes zur effizienten Induktion einer Spannung in den die Kurbelwelle umgebenden Spulen nicht möglich ist. Zudem besteht die Gefahr einer Entmagnetisierung der Permanentmagnete. Die in der EP 1 223 316 B1 beschriebene Anordnung erfordert also entweder die Verwendung einer aus einem nicht-magnetisierbaren Werkstoff bestehenden Kurbelwelle oder weist systembedingt eine geringe elektrische Leistung aufgrund der Anordnung der Permanentmagneten auf. Da sich ein Kurbelwellen-Ausgleichsgewicht zur Erfüllung seiner gattungsgemäßen Funktion nur in einem dem benachbarten Pleuellager gegenüberliegenden Bereich erstreckt, der in der Regel deutlich unter 120° und somit weniger als ein Drittel des Rotationsumfangs umfasst, können die Permanentmagneten im Ausgleichsgewicht auch nur in diesem Teilbereich angeordnet werden, wodurch die elektrische Maximalleistung des elektromechanischen Wandlers erheblich begrenzt wird. Zudem ist die Anordnung der Permanentmagnete mittels Presssitz in der Kurbelwelle aus produktionstechnischen Gründen aufwändig und es besteht das Risiko, dass sich die Permanentmagneten bei hohen Kurbelwellendrehzahlen lösen.

Die der Erfindung zugrunde liegende Aufgabe besteht darin, einen Hubkolbenmotor mit integriertem elektromechanischen Wandler zu schaffen, der sich durch eine erhöhte elektrische Leistung, einen einfachen Aufbau und eine vereinfachte Wartbarkeit auszeichnet und der auf einem konventionellen, nicht-elektrifizierten und nur geringfügig angepassten Hubkolbenmotor basieren kann.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Der erfindungsgemäße Hubkolbenmotor, welcher insbesondere als Kraftfahrzeug-, Schiffs- oder Stationärmotor einsetzbar ist, umfasst einen Zylinderblock mit einer Kurbelkammer, die zumindest teilweise in dem Zylinderblock ausgeformt ist. Vorzugsweise wird die Kurbelkammer oben von einer entsprechenden Ausformung des Zylinderblocks und unten von einer Ölwanne abgeschlossen.

Innerhalb dieser Kurbelkammer ist eine Kurbelwelle angeordnet. Die Kurbelwelle ist in mehreren Hauptlagern um eine Kurbelwellenachse drehbar, also um die Kurbelwellenachse rotierbar gelagert. Insbesondere wird die Kurbelwelle von Lagerdeckeln, welche vorzugsweise mittels Schrauben mit dem Zylinderblock befestigt sind, in der Kurbelkammer um die Kurbelwellenachse drehbar gehalten. Die Kurbelwelle, die vorzugsweise einstückig ausgebildet ist, jedoch auch mehrstückig zusammengebaut sein kann, besteht aus einem magnetisierbaren Werkstoff. Hierunter ist zu verstehen, dass die Kurbelwelle zumindest im Bereich ihrer Kurbelwangen ferromagnetische oder ferrimagnetische Eigenschaften aufweist und dort magnetisierbar ist. Sie wird also vom Magnetpol eines äußeren Magnetfelds angezogen, ohne dass eine hohe Restmagnetisierung zurückbleibt, in anderen Worten ist sie weichmagnetisch, oder sie verursacht selbst nach einer Magnetisierung ein statisches Magnetfeld, da sie aufgrund einer hohen Remanenz hartmagnetisch ist. Insbesondere ist die Kurbelwelle entweder im Gießverfahren, beispielsweise aus Kugelgraphitguss, Vergütungs- oder Nitrierstahl gefertigt oder im Druckumformverfahren geschmiedet.

Die Kurbelwelle umfasst zwischen zwei Hauptlagern, in welchen sie um die Kurbelwellenachse drehbar gelagert ist, versetzt zu der Kurbelwellenachse mindestens ein Pleuellager. Der Versatz wird jeweils von einer sich zumindest teilweise in, bezogen auf die Kurbelwellenachse, radiale Richtung erstreckende Kurbelwange zwischen einem Hauptlager und einem Pleuellager gebildet. In anderen Worten erstreckt sich die Kurbelwange mit einer geometrischen Richtungskomponente in Richtung senkrecht zur Kurbelwellenachse, also in radiale Richtung. Die Kurbelwange ist, bezogen auf die Kurbelwellenachse, axial benachbart zu dem ersten Pleuellager angeordnet. Unter axial benachbart ist zu verstehen, dass sich die Kurbelwange in einer parallel zu der Kurbelwellenachse verlaufenden Richtung unmittelbar oder mittelbar neben dem Pleuellager befindet.

In einem ersten Pleuellager der Kurbelwelle ist mindestens ein erster Pleuel drehbar gelagert, an welchem ein linear geführter erster Kolben angeordnet ist. Bei Rotation der Kurbelwelle führt der Pleuel eine Pleuelbewegung in einem geometrischen Pleuelbewegungsraum durch. Unter der Pleuelbewegung ist derjenige geometrische Bewegungsraum zu verstehen, welchen der Pleuel, der sich aus dem in dem Pleuellager gelagerten unteren Pleuelauge, dem Pleuellagerdeckel, dem Pleuelschaft und dem Pleuelkopf zusammensetzt, bei einer vollständigen Drehung der Kurbelwelle und einer vollständigen Hubbewegung des Kolbens aufspannt. In anderen Worten ist der Pleuelbewegungsraum derjenige geometrische Freiraum innerhalb Kurbelkammer, welcher zur ungehinderten Bewegung des Pleuels erforderlich ist. Es ist möglich, dass mehrere Pleuel nebeneinander an demselben Pleuellager angeordnet sind. In diesem Fall ist der Pleuelbewegungsraum der von beiden Pleueln zu deren freien Beweglichkeit erforderliche Freiraum innerhalb der Kurbelkammer.

Die erste Kurbelwange, insbesondere alle Kurbelwangen der Kurbelwelle, weist auf einer in Bezug zu der Kurbelwellenachse radial nach außen weisenden und dem ersten Pleuellager gegenüberliegenden Seite eine erste Befestigungsfläche auf. In anderen Worten weist die Befestigungsfläche zumindest mit einer Richtungskomponente in eine Richtung, welche sich senkrecht zur Kurbelwellenachse - also radial - erstreckt und welche bezogen auf die Kurbelwellenachse auf diejenige Seite weist, welche derjenigen Seite, auf welcher sich das Pleuellager befindet, gegenüberliegt.

Unter einer Befestigungsfläche ist allgemein eine mechanische Schnittstelle zu verstehen, welche ein formschlüssiges Anordnen einer Komponente ermöglicht, wobei der Formschluss in radiale Richtung erfolgt, also senkrecht zur Kurbelwellenachse.

Ein erstes Ausgleichsgewicht ist an der ersten Befestigungsfläche in radiale Richtung und insbesondere auch in Umfangsrichtung formschlüssig fixiert. Unter einem Formschluss in radiale Richtung bzw. Umfangsrichtung ist eine derart hinterschneidende Verbindung zu verstehen, dass eine formschlüssige Fixierung zumindest in eine radiale Richtung bzw. in Umfangsrichtung zur Kurbelwellenachse erfolgt. In anderen Worten ist das erste Ausgleichsgewicht derart an der Befestigungsfläche formschlüssig fixiert, dass das Ausgleichsgewicht bei Rotation der Kurbelwelle auf selbiger fixiert bleibt. Insbesondere erfolgt der Formschluss mittels einer Schraubverbindung.

Insbesondere weist die erste Befestigungsfläche und/oder das erste Ausgleichgewicht mindestens eine Gewindebohrung auf, wobei die formschlüssige Verbindung durch mindestens eine durch eine in dem ersten Ausgleichgewicht bzw. der ersten Befestigungsfläche ausgeformte Durchgangsbohrung hindurch geführte Schraube hergestellt ist. Alternativ oder zusätzlich kann die formschlüssige Verbindung mittels einer sich insbesondere parallel zur Kurbelwellenachse erstreckenden Hinterschneidung erfolgen, welche beispielsweise von einer sich axial verlaufenden bzw. parallel zur Kurbelwelle erstreckenden Linearführung zwischen der ersten Befestigungsfläche und dem ersten Ausgleichgewicht, insbesondere einer schwalbenschwanzartigen Führung, gebildet wird, wobei das erste Ausgleichgewicht in Richtung parallel zur Kurbelwellenachse, also axial, beispielsweise kraft-, reib- oder formschlüssig, insbesondere mittels Verschraubung, gehalten wird.

Das erste Ausgleichsgewicht besteht aus einem nichtmagnetisierbaren Werkstoff bzw. einem nichtmagnetisierbaren Material. Insbesondere besteht das erste Ausgleichsgewicht aus Gusseisen, Edelstahl, Kohlefaser, einem keramischer Werbstoff, Aluminium und/oder mindestens einem sonstigen nichtmagnetisierbaren Werkstoff. Gusseisen wird insbesondere von austenitisches Gusseisen, insbesondere Grauguss gebildet. Kohlefaser ist insbesondere gesintert. Alternativ besteht aber auch die Möglichkeit, dass sich das erste Ausgleichsgewicht aus einer Kombinationen mindestens zweier dieser Werkstoffe oder eines dieser Werkstoffe mit einem weiteren nichtmagnetisierbaren Werkstoff zusammensetzt. Insbesondere kann das Ausgleichsgewicht auch aus einem ummantelten nichtmagnetisierbaren Werkstoff bestehen. Vorzugsweise weist dieser Werkstoff ein hohes spezifisches Gewicht auf. Das Gewicht und die Anordnung des Ausgleichgewichts sollte, gemeinsam mit dem Gewicht der weiten unten beschriebenen und an dem Ausgleichgewicht angeordneten ersten inneren Magnetfeldeinheit, derart sein, dass die aus der Exzentrizität des ersten Pleuellagers, des mindestens einen ersten Pleuels und insbesondere des ersten Kolbens resultierende rotierende Massenkraft weitgehend, vorzugsweise vollständig kompensiert ist. Der jeweilige Anteil von Ausgleichgewicht und innerer Magnetfeldeinheit kann beliebig variieren, solange der Massenausgleich weitgehend oder vollständig erfolgen kann.

Die erste innere Magnetfeldeinheit ist auf einer in Bezug zu der Kurbelwellenachse radial nach außen weisenden Seite des ersten Ausgleichsgewichts angeordnet. In anderen Worten sind die erste innere Magnetfeldeinheit und das erste Ausgleichsgewicht miteinander verbunden, wobei sich die erste innere Magnetfeldeinheit in Bezug zu der Kurbelwellenachse in eine Richtung radial nach außen erstreckt. Insbesondere ist die erste innere Magnetfeldeinheit in eine sich in axiale Richtung - also im Wesentlichen parallel zu der Kurbelwellenachse - erstreckende erste Linearführung auf dem ersten Ausgleichsgewicht aufgeschoben und ist dort axial fixiert, so dass sie auch in Richtung parallel zur Kurbelwellenachse im normalen Betrieb der Kurbelwelle beispielsweise kraft-, reib- oder formschlüssig festgehalten ist. Diese erste Linearführung fixiert die erste innere Magnetfeldeinheit bezogen auf die Kurbelwellenachse in radiale Richtung und Umfangsrichtung formschlüssig. Unter einem Formschluss in radiale Richtung und Umfangsrichtung ist allgemein eine derart hinterschneidende Verbindung zu verstehen, dass eine formschlüssige Fixierung zumindest in eine radiale Richtung bzw. Umfangsrichtung zur Kurbelwellenachse erfolgt. In anderen Worten ist die erste innere Magnetfeldeinheit derart an dem ersten Ausgleichsgewicht der Befestigungsfläche formschlüssig fixiert, dass die erste innere Magnetfeldeinheit bei Rotation der Kurbelwelle auf selbiger fixiert bleibt.

Somit ist die erste innere Magnetfeldeinheit über das an der ersten Befestigungsfläche fixierte erste Ausgleichsgewicht an der ersten Kurbelwange der Kurbelwelle derart angeordnet, dass die erste innere Magnetfeldeinheit in Bezug auf die Kurbelwellenachse radial nach außen weist. Hierbei kreist die erste innere Magnetfeldeinheit bei Rotation der Kurbelwelle um die Kurbelwellenachse auf einer zu dem Pleuelbewegungsraum axial benachbarten geometrischen ersten Kreisbahn. In anderen Worten sind sowohl die erste innere Magnetfeldeinheit, als auch das erste Ausgleichsgewicht derart ausgeformt und angeordnet, dass sich der Pleuel einerseits und die erste innere Magnetfeldeinheit und das erste Ausgleichsgewicht andererseits bei Rotation der Kurbelwelle kollisionsfrei bewegen, wobei die Bewegungsräume des Pleuels einerseits und der ersten inneren Magnetfeldeinheit und des ersten Ausgleichsgewichts andererseits in axial beabstandeter, aber axial nebeneinander liegenden Gegenüberlage befinden.

Bei einem herkömmlichen nicht-elektrifizierten Hubkolbenmotor mit konventioneller Kurbelwelle mit einstückig ausgeformten Ausgleichsgewichten ist diese kollisionsfreie Beweglichkeit innerhalb der Kurbelkammer bereits gegeben. Somit besteht die Möglichkeit, die Ausgleichgewichte einer derartigen konventionellen Kurbelwelle insbesondere mittels spanender Bearbeitung zu entfernen und eine Befestigungsfläche für das nichtmagnetisierbare Ausgleichsgewicht vorzusehen, wobei das nichtmagnetisierbare Ausgleichsgewicht und die innere Magnetfeldeinheit entweder im Wesentlichen den gleichen Querschnitt in radiale und axiale Richtung - also den gleichen Rotationsquerschnitt - aufweisen wie das entfernte Ausgleichsgewicht, oder einen vergrößerten Rotationsquerschnitt besitzen, um den zur Verfügung stehenden Raum in der Kurbelkammer bestmöglich auszunutzen. Die Erstreckung in Umfangsrichtung, also entlang der Kreisbewegungsbahn des nichtmagnetisierbaren Ausgleichsgewichts und der inneren Magnetfeldeinheit, kann geometrisch betrachtet beliebig variiert werden, da dieser Raum innerhalb der Kurbelkammer zur Ermöglichung der freien Rotierbarkeit frei bleibt. Um eine Kompensation der rotierenden Massenkraft zu ermöglichen, ist es von Vorteil, die Erstreckung des nichtmagnetisierbaren Ausgleichsgewichts in Umfangsrichtung jedoch im Wesentlichen auf den dem Pleuellager gegenüberliegenden Bereich zu begrenzen.

In einer Variante der Erfindung sind das nichtmagnetisierbare Ausgleichsgewicht und die innere Magnetfeldeinheit einstückig ausgebildet und sind insbesondere in demselben Gehäuse untergebracht, wobei sich die einstückige Einheit funktionell in einen Ausgleichsgewichtsabschnitt und einen Abschnitt der inneren Magnetfeldeinheit unterteilen kann.

Die erste Befestigungsfläche und weitere Abschnitte der Kurbelwelle können zusätzlich zum dem mindestens einen nichtmagnetisierbaren Ausgleichsgewicht als Ausgleichsgewichte für den Massenausgleich dienen. Ebenfalls ist es möglich, dass der Hubkolbenmotor zusätzlich eine Ausgleichswelle zum Ausgleich von Massenkräften und/oder Massenmomenten aufweist.

Radial beabstandet zur ersten Kreisbahn der ersten inneren Magnetfeldeinheit ist eine erste äußere Magnetfeldeinheit in der Kurbelkammer feststehend angeordnet. In anderen Worten umgibt, umgreift oder umschließt diese erste äußere Magnetfeldeinheit die erste Kreisbahn der ersten inneren Magnetfeldeinheit. Wiederum in anderen Worten ist diese erste äußere Magnetfeldeinheit radial außerhalb des rotatorischen Bewegungsraums der ersten inneren Magnetfeldeinheit angeordnet und umgreift diesen Bewegungsraum entweder teilweise oder vollständig, insbesondere mit einem Umgreifungswinkel zwischen 120° und 360°.

Die erste innere Magnetfeldeinheit und die erste äußere Magnetfeldeinheit sind derart angeordnet und ausgebildet, dass sie gemeinsam einen ersten elektromechanischen Wandler, insbesondere einen Elektromotor oder einen elektrischen Generator, bilden. Hierzu bildet eine der beiden Magnetfeldeinheiten eine magnetfelderzeugende Einheit und die andere eine Spuleneinheit, auf welche das Magnetfeld der magnetfelderzeugenden Einheit zumindest in einem Teilabschnitt einer vollständigen Umdrehung der Kurbelwelle wirkt, wobei in die Spuleneinheit bei aufgrund von Rotation der Kurbelwelle sich änderndem Magnetfeld eine Spannung induziert wird, so dass der elektromechanische Wandler als Generator wirkt, oder wobei durch Anlegen einer elektrischen Spannung an die Spuleneinheit ein Magnetfeld erzeugbar ist, mittels welchem eine Kraft auf die magnetfelderzeugende Einheit und somit auf die Kurbelwelle ausübbar und die Kurbelwelle somit in Rotation bringbar ist, so dass der elektromechanische Wandler als Elektromotor wirkt.

In anderen Worten drehen sich bei Rotation der Kurbelwelle die magnetfelderzeugende Einheit und die Spuleneinheit relativ zueinander, wodurch aufgrund der elektromagnetischen Wechselwirkung zwischen der magnetfelderzeugenden Einheit und der Spuleneinheit eine Spannung in die Spuleneinheit induziert wird und der elektromechanische Wandler als ein Generator wirkt. Durch Speisen der Spuleneinheit mit einer Wechselspannung, insbesondere von einer Batterie, wird auf die magnetfelderzeugenden Einheit eine elektromagnetische Kraft ausgeübt und durch die elektromagnetische Wechselwirkung wirkt der elektromechanische Wandler als ein Elektromotor.

Die an der Kurbelwelle angeordnete erste innere Magnetfeldeinheit kann von einer ersten inneren Permanentmagneteinheit, welche mittels mindestens eines Permanentmagneten ein Permanentmagnetfeld erzeugt, oder von einer ersten inneren Spuleneinheit, mittels welcher ein Elektromagnetfeld erzeugbar ist oder in welche mittels eines magnetischen Wechselfeldes eine Spannung induzierbar ist, gebildet werden.

Auch die feststehend in der Kurbelkammer angeordnete erste äußere Magnetfeldeinheit kann von einer ersten äußeren Spuleneinheit, mittels welcher ein Elektromagnetfeld erzeugbar ist oder in welche mittels eines magnetischen Wechselfeldes eine Spannung induzierbar ist, oder von einer ersten äußeren Permanentmagneteinheit, welche mittels mindestens eines Permanentmagneten ein Permanentmagnetfeld erzeugt, gebildet werden. Damit die beiden Magnetfeldeinheiten einen elektromechanischen Wandler bilden können, muss mindestens eine der beiden Magnetfeldeinheiten als eine Spuleneinheit ausgebildet sein.

Ein Vorteil des erfindungsgemäßen Hubkolbenmotors besteht darin, dass aufgrund der Anordnung eines nichtmagnetisierbaren Ausgleichsgewichts auf der magnetisierbaren Kurbelwelle und der Anordnung der ersten inneren Magnetfeldeinheit auf diesem nichtmagnetisierbaren Ausgleichsgewicht eine Magnetisierung der Kurbelwelle und somit eine negative Beeinflussung des Magnetfelds durch die Kurbelwelle weitgehend vermieden werden kann, da das nichtmagnetisierbare Ausgleichsgewicht als magnetischer Isolator zwischen der Kurbelwelle und der inneren Magnetfeldeinheit wirkt. Somit wird auch eine langfristige Entmagnetisierung der Permanentmagneten reduziert, sofern die erste innere Magnetfeldeinheit als Permanentmagneteinheit ausgebildet ist.

Ein weiterer Vorteil besteht darin, dass die Erstreckung der ersten inneren Magnetfeldeinheit in Umfangsrichtung, also entlang der Kreisbewegungsbahn der inneren Magnetfeldeinheit, weitgehend unabhängig von der Erstreckung des ersten Ausgleichgewichts sein kann, da letztere aufgrund der gattungsgemäßen Funktion eines Ausgleichgewichts auf den Bereich, welche dem Pleuellager gegenüberliegt, begrenzt ist. So ist es beispielsweise möglich, dass die Erstreckung des Ausgleichsgewichts in Umfangsrichtung unter 135°, insbesondere unter 120°, im Speziellen unter 90° beträgt, während die Erstreckung der inneren Magnetfeldeinheit in Umfangsrichtung über 135°, insbesondere über 180°, insbesondere über 210°, im Speziellen 360° beträgt, wobei im Falle einer Erstreckung von 360° die innere Magnetfeldeinheit die geometrische Grundform eines geschlossenen Rings hat. Dies bewirkt, dass der gesamte Umfang der ersten geometrischen Kreisbahn zur Anordnung der inneren Magnetfeldeinheit genutzt und somit die erzielbare elektrische Leistung des ersten elektromechanischen Wandlers erheblich gesteigert werden kann.

In einer Weiterbildung der Erfindung weist die erste innere Magnetfeldeinheit die Form eines die erste Kurbelwange umgebenden kreisbogenförmigen inneren Ringabschnitts mit einer auf der Kurbelwellenachse liegenden geometrischen ersten Achse auf. In anderen Worten hat die erste innere Magnetfeldeinheit die Form eines Ringabschnitts, also eines Ringsegments, das eine Kreisbogenform aufweist, wobei die Achse, um welche sich der Kreisbogen bzw. das Ringsegment erstreckt und auf welcher der Kreisbogenmittelpunkt liegt, von einer geometrischen ersten Achse gebildet wird. Im zusammengebauten Zustand von Kurbelwelle und erster innerer Magnetfeldeinheit liegen die erste Achse und die Kurbelwellenachse aufeinander und formen eine gemeinsame Achse. Wiederum in anderen Worten erstreckt sich die kreisbogenförmige erste innere Magnetfeldeinheit bezogen auf die Kurbelwellenachse in Umfangsrichtung, also entlang der Kreisbewegungsbahn der inneren Magnetfeldeinheit, mit der ersten Achse als geometrische Mittelachse. Insbesondere erstreckt sich der kreisbogenförmige innere Ringabschnitt mit einem ersten Mittelpunktswinkel von über 135°, insbesondere über 180°, insbesondere über 210°. Unter dem Mittelpunktswinkel ist der auch als Zentriwinkel bezeichnete Winkel im Mittelpunkt des geometrischen Kreisbogens zu verstehen, welcher von den beiden Kreisradien, die den geometrischen Kreisbogen begrenzen, eingeschlossen ist.

In einer speziellen Weiterbildung erstreckt sich der kreisbogenförmige innere Ringabschnitt mit einem ersten Mittelpunktswinkel von 360°, wobei die erste innere Magnetfeldeinheit die Form eines die erste Kurbelwange umschließenden geschlossenen kreisförmigen inneren Rings aufweist. In anderen Worten hat die erste innere Magnetfeldeinheit die Form eines geschlossenen Rings, in anderen Worten eines geometrischen Kreises, wobei dieser innere Ring die erste Kurbelwange der Kurbelwelle zumindest teilweise oder vollständig umschließt. Der geometrische Mittelpunkt dieses Rings liegt auf der ersten Achse bzw. der Kurbelwellenachse.

Auch die erste äußere Magnetfeldeinheit kann in einer Weiterbildung der Erfindung die Form eines kreisbogenförmigen äußeren Ringabschnitts mit einer auf der Kurbelwellenachse liegenden geometrischen zweiten Achse aufweisen. Dieser kreisbogenförmige äußere Ringabschnitt umgibt die erste Kreisbahn der ersten inneren Magnetfeldeinheit radial beabstandet. Insbesondere verlaufen der innere und äußere Ringabschnitt konzentrisch. Hat die erste innere Magnetfeldeinheit die Form eines kreisbogenförmigen inneren Ringabschnitts oder eines Rings, so ist der Außendurchmesser dieses inneren Ringabschnitts oder Rings insbesondere kleiner als der Innendurchmesser des äußeren Ringabschnitts oder Rings. Insbesondere erstreckt sich der kreisbogenförmige äußere Ringabschnitt mit einem zweiten Mittelpunktswinkel von über 135°, insbesondere über 180°, insbesondere über 210°. In einer speziellen Ausführungsform der Erfindung erstreckt sich der kreisbogenförmige äußere Ringabschnitt mit einem zweiten Mittelpunktswinkel von 360°, wobei die erste äußere Magnetfeldeinheit die Form eines die erste Kreisbahn der ersten inneren Magnetfeldeinheit radial beabstandet umschließenden geschlossenen kreisförmigen äußeren Rings aufweist.

Die beschriebenen Ringabschnitte bzw. Ringe können einen beliebigen, insbesondere eine rechteckigen, quadratischen, polygonalen, kreisrunden, ovalen oder sonstigen Querschnitt haben.

Die äußere Magnetfeldeinheit ist insbesondere an einem Lagerdeckel eines zu der ersten Kurbelwange benachbarten Hauptlagers der Kurbelwelle angeordnet. Hierzu kann die äußere Magnetfeldeinheit eine Halterung aufweisen, die mittels Lagerdeckelschrauben, welche auch den Lagerdeckel mit dem Zylinderblock verbinden, an dem Lagerdeckel fixiert sind. Somit kann die äußere Magnetfeldeinheit ohne Vorsehen weitere Befestigungselemente in einem konventionellen Hubkolbenmotor angeordnet werden.

In einer bevorzugten Ausführungsform ist die erste innere Magnetfeldeinheit permanentmagnetisch und als erste innere Permanentmagneteinheit ausgebildet. Dies hat den Vorteil, dass keine elektrische Verbindung oder Spannungsübertragung mit der rotierbaren Kurbelwelle hergestellt werden muss.

Die erste innere Permanentmagneteinheit weist mindestens einen Permanentmagneten auf, der derart ausgebildet und angeordnet ist, dass bei Rotation der Kurbelwelle in einem radial außerhalb der ersten inneren Permanentmagneteinheit liegenden, nicht mitrotierenden Bereich ein magnetisches Wechselfeld, also ein sich änderndes Magnetfeld besteht. In anderen Worten ist die erste innere Permanentmagneteinheit derart ausgebildet, dass bei Rotation selbiger ein magnetisches Wechselfeld in der ersten äußeren Magnetfeldeinheit herrscht und dort eine Spannung induzierbar ist.

In einer Weiterbildung der Erfindung weist die erste innere Permanentmagneteinheit bezogen auf die Kurbelwellenachse in Kreisumfangsrichtung derart aneinander gereihte erste Permanentmagnete auf, dass die magnetische Polung der ersten Permanentmagnete in Kreisumfangsrichtung zur Erzeugung eines magnetischen Wechselfeldes bei Rotation der Kurbelwelle alternierend ist. In anderen Worten wechseln sich Nord und Südpole mehrerer Permanentmagneten der Permanentmagneteinheit derart ab, dass sich bei Rotation der Kurbelwelle ein sich änderndes magnetisches Feld ergibt. Insbesondere sind die ersten Permanentmagnete, insbesondere entlang des kreisbogenförmigen inneren Ringabschnitts, aneinandergrenzend angeordnet und haben in eine gemeinsame Umfangsrichtung weisende Nordpole. Die zwischen dem Nord- und Südpol eines jeden Permanentmagneten verlaufende Magnetenachse verläuft also jeweils in Kreisumfangsrichtung zur Rotationsbahn. Sie bildet insbesondere eine Tangente zur Kreisbahn der ersten inneren Permanentmagneteinheit oder sie verläuft zu einer solchen Tangente parallel, oder sie verläuft als Kreisbogen parallel zu dieser Kreisbahn. Alternativ können die ersten Permanentmagnete, insbesondere entlang des kreisbogenförmigen inneren Ringabschnitts, aneinandergrenzend in radiale Richtung weisenden Nord- und Südpolen mit abwechselnder Polungsausrichtung aufweisen. In anderen Worten verlaufen die zwischen dem Nord- und Südpol eines jeden Permanentmagneten verlaufende Magnetenachsen also jeweils radial zur ersten Achse bzw. zur Kurbelwellenachse, insbesondere schneiden sie sich im Wesentlichen in einem auf der ersten Achse bzw. der Kurbelwellenachse liegenden Punkt, wobei die Polungsausrichtung benachbarter Permanentmagneten jeweils abwechselt.

Beliebige andere Permanentmagnetausrichtungen, welche bei Rotation der Kurbelwelle das beschriebene magnetische Wechselfeld bewirken, sind erfindungsgemäß möglich.

Die erste innere Magnetfeldeinheit kann jedoch alternativ elektromagnetisch in Form einer ersten inneren Spuleneinheit ausgebildet sein. Insbesondere werden die Permanentmagneten durch Spulen ersetzt. In diesem Falle wird das Magnetfeld von der ersten inneren Magnetfeldeinheit nicht permanentmagnetisch sondern elektromagnetisch erzeugt, oder ein von der ersten äußeren Magnetfeldeinheit erzeugtes Magnetfeld tritt in elektromagnetischer Wechselwirkung mit der ersten inneren Spuleneinheit und induziert dort eine Spannung.

Mögliche Weiterbildungen der Erfindung sehen unterschiedliche Spulenanordnungen der ersten inneren Spuleneinheit vor. Die Spulenanordnungen entsprechen zum Teil den Anordnungen der bereits oben beschriebenen Permanentmagneten, wobei die obigen Ausführungen in Bezug auf die Permanentmagneten auch auf die Spulen anzuwenden sind.

In einer ersten Variante weist die erste innere Spuleneinheit bezogen auf die Kurbelwellenachse in Kreisumfangsrichtung aneinander gereihte erste Spulen auf, deren erste Spulenachsen in Bezug auf die Kurbelwellenachse radial verlaufen. Insbesondere schneiden sich diese Spulenachsen im Wesentlichen in einem Punkt nahe oder auf der ersten Achse bzw. der Kurbelwellenachse. Insbesondere sind die ersten Spulen derart angeordnet und/oder verschaltet, dass die magnetische Polung der ersten Spulen in Kreisumfangsrichtung zur Erzeugung eines magnetischen Wechselfeldes bei Rotation der Kurbelwelle alternierend ist. Dies kann beispielsweise dadurch erfolgen, dass die aneinander gereihten ersten Spulen mit abwechselnder elektrischer Polung spannungsversorgt werden oder die Spulenwindungen abwechseln inverse sind, so dass die magnetische Polung der ersten Spulen in Kreisumfangsrichtung zur Erzeugung eines magnetischen Wechselfeldes bei Rotation der Kurbelwelle alternierend ist. In anderen Worten wechseln sich Nord und Südpole mehrerer ersten Spulen der ersten Spuleneinheit derart ab, dass sich bei Rotation der Kurbelwelle ein sich änderndes magnetisches Feld ergibt. Es besteht einerseits die Möglichkeit, dass das mittels der ersten Spuleneinheit erzeugte Magnetfeld relativ zu der ersten Spuleneinheit konstant ist, indem eine konstante Spannungsversorgung der ersten Spulen erfolgt, oder dass das mittels der ersten Spuleneinheit erzeugte Magnetfeld auch relativ zu der ersten Spuleneinheit wechselnd ist, indem die Spannungsversorgung der ersten Spulen wechselt. Dieser Wechsel kann insbesondere mittels eines Kommutators erfolgen.

In einer zweiten Variante umfasst die erste innere Spuleneinheit mindestens eine sich in Kreisumfangsrichtung erstreckende erste Spule, deren erste Spulenachse in Kreisumfangsrichtung verläuft. In einer dritten Variante weist die erste innere Spuleneinheit mindestens eine erste Spule auf, deren erste Spulenachse parallel zu der Kurbelwellenachse verläuft.

Zur Erzeugung eines Magnetfeldes mittels der mindestens einen ersten Spule, insbesondere der ersten Spulen, können selbige entweder spannungsversorgt werden oder die ersten Spulen sind derart miteinander verschaltet und derart angeordnet, dass bei Rotation der Kurbelwelle und Wirken eines insbesondere von der ersten äußeren Magnetfeldeinheit hervorgerufenes und insbesondere durch die Rotation wechselnden externen Magnetfeldes auf die ersten Spulen sich selbige gegenseitig mit Spannung versorgen, insbesondere indem sie als Kurzschlussläufer, beispielsweise einer Asynchronmaschine, ausgebildet sind.

Um die erste innere Spuleneinheit mit Spannung zu versorgen, kann die Kurbelwelle beispielsweise Schleifkontakte in der Kurbelkammer zwischen dem Zylinderbock und der Kurbelwelle aufweisen, mittels welcher eine mehrpolige elektrische Verbindung zu der Spuleneinheit hergestellt werden kann. Insbesondere ist diese Verbindung zwei-, drei- oder mehrpolig, um mehrere der ersten Spulen wechselnd mit unterschiedlichen Spannungen zu versorgen. Diese wechselnde Spannungsversorgung kann in Abhängigkeit von der Stellung der Kurbelwelle erfolgen. Die Schleifkontakte können hierzu auch als Kommutator ausgebildet sein. Eine derartige Schleifkontaktverbindung ist bei einem Motor, dessen Kurbelkammer mit Motorenöl beaufschlagt ist, weitgehend unkritisch, jedoch vor allem bei einem mit einem Treibstoff-Öl-Gemisch betriebenen Verbrennungsmotor, insbesondere einem Zweitaktmotor, aufgrund allfälliger Funkenentwicklung mit Risiken verbunden. Außerdem unterliegen Schleifkontakte einem erhöhten Verschleiß.

Die Erfindung umfasst daher in einer Weiterbildung außerdem eine kontaktlose Spannungsversorgung der mindestens einen ersten Spulen der ersten inneren Spuleneinheit auf der Kurbelwelle. Hierzu weist die erste innere Spuleneinheit mindestens eine elektrisch mit der mindestens einen ersten Spule verbundene Zusatzspule auf. In der Kurbelkammer ist axial benachbart zur ersten Kreisbahn der ersten inneren Spuleneinheit eine permanentmagnetische oder elektromagnetische seitliche Magnetfeldeinheit feststehend angeordnet. Die mindestens eine Zusatzspule und die seitliche Magnetfeldeinheit sind derart zueinander angeordnet, haben insbesondere eine - bezogen auf die Kurbelwellenachse - derartige axiale Gegenüberlage zueinander, und sind derart ausgebildet, dass sie bei Rotation der Kurbelwelle um die Kurbelwellenachse gemeinsam einen elektrischen Generator zur elektrischen Spannungsversorgung der mindestens einen ersten Spule bilden. Die mindestens eine Zusatzspule hat insbesondere eine parallel zu der Kurbelwellenachse verlaufende Zusatzspulenachse. Insbesondere wird die mindestens eine Zusatzspule von mehreren in Kreisumfangsrichtung aneinander gereihten Zusatzspulen gebildet. Diese aneinander gereihten Zusatzspulen haben vorzugsweise parallel zu der Kurbelwellenachse verlaufende Zusatzspulenachsen. Insbesondere ist jeder ersten Spule eine erste Zusatzspule zugeordnet, wobei die erste Spule und die erste Zusatzspule elektrisch verbunden sind. Die ersten Zusatzspulen sind vorzugsweise in der ersten Spuleneinheit integriert. Die seitliche Magnetfeldeinheit ist insbesondere elektromagnetisch und wird von mehreren in Kreisumfangsrichtung aneinander gereihten seitlichen Spulen, insbesondere mit parallel zu der Kurbelwellenachse verlaufenden Seitenspulenachsen, gebildet. Durch Anlegen einer elektrischen Wechselspannung an die seitlichen Spulen und/oder bei Rotation der Kurbelwelle kommt es aufgrund der magnetischen Wechselwirkung zwischen den seitlichen Spulen und den Zusatzspulen zu einer magnetischen Induktion in den Zusatzspulen. Mit der dadurch erzeugten Spannung werden die ersten Spulen der ersten inneren Spuleneinheit mit Spannung versorgt, so dass diese wiederum ein Elektromagnetfeld erzeugen, mittels welchem bei Rotation der Kurbelwelle eine Spannung in die äußere Magnetfeldeinheit induziert werden kann.

Ein Vorteil dieser Anordnung besteht darin, dass auf den Einsatz von Permanentmagneten entweder vollständig oder teilweise verzichtet werden kann und der Hubkolbenmotor im Verbrennungsmotorbetrieb bei spannungsfreier erster innerer Spuleneinheit ohne magnetischen Widerstand betrieben werden kann, wodurch der Wirkungsgrad des Verbrennungsmotors erhöht wird.

In einer Variante der Erfindung ist die erste äußere Magnetfeldeinheit elektromagnetisch und als erste äußere Spuleneinheit ausgebildet, wobei die erste innere Magnetfeldeinheit entweder permanentmagnetisch oder elektromagnetisch ist. Die erste äußere Spuleneinheit kann in Kreisumfangsrichtung aneinander gereihte zweite Spulen aufweisen, deren zweite Spulenachsen in Bezug auf die Kurbelwellenachse radial verlaufen. Insbesondere laufen die zweiten Spulenachsen der vorzugsweise gleichmäßig verteilten zweiten Spulen im Wesentlichen in einem Punkt zusammen, der nahe oder auf der zweiten Achse bzw. der Kurbelwellenachse liegt. In anderen Worten sind die zweiten Spulen - vorzugsweise gleichmäßig - sternförmig auf der ersten äußeren Magnetfeldeinheit angeordnet.

Alternativ umfasst die erste äußere Spuleneinheit mindestens eine sich in Kreisumfangsrichtung erstreckende zweite Spule, deren zweite Spulenachse in Kreisumfangsrichtung verläuft. Die zweite Spulenachse kann beispielsweise entweder kreisbogenförmig oder gerade verlaufen, wobei der Kreisbogen im ersten Fall vorzugsweise kontenzentrisch zu dem kreisbogenförmigen äußeren Ringabschnitt bzw. der Kreisbahn der ersten inneren Magnetfeldeinheit verläuft, mit einer auf der zweiten Achse liegenden geometrischen Achse. Im zweiten Fall, einer geraden zweiten Spulenachse, verläuft diese zweite Spulenachse vorzugsweise parallel zu einer Tangente des kreisbogenförmigen äußeren Ringabschnitts.

In einer weiteren Variante umfasst die erste äußere Spuleneinheit mindestens eine zweite Spule, deren zweite Spulenachse parallel zu der Kurbelwellenachse verläuft. Diese mindestens eine zweite Spule kann die Kurbelwelle entweder vollständig umschließen, wobei die erste äußere Spuleneinheit die Form eines die erste Kreisbahn der ersten inneren Magnetfeldeinheit radial beabstandet umschließenden geschlossenen kreisförmigen äußeren Rings aufweist. In diesem Falle liegt die parallel zu der Kurbelwellenachse verlaufende zweite Spulenachse vorzugsweise auf dieser Kurbelwellenachse. Alternativ ist die mindestens eine zweite Spule neben der ersten inneren Magnetfeldeinheit angeordnet und weist insbesondere eine Kreisbogenform oder Bananenform auf.

Sofern die erste innere Magnetfeldeinheit elektromagnetisch ist, kann die erste äußere Magnetfeldeinheit anstelle einer elektromagnetischen Ausbildung permanentmagnetisch sein, wobei die erste äußere Magnetfeldeinheit von einer ersten äußeren Permanentmagneteinheit gebildet wird. In diesem Falle hat die erste äußere Permanentmagneteinheit bezogen auf die Kurbelwellenachse in Kreisumfangsrichtung insbesondere derart aneinander gereihte zweite Permanentmagnete, dass die magnetische Polung der zweiten Permanentmagnete in Kreisumfangsrichtung zur Erzeugung eines magnetischen Wechselfeldes bei Rotation der Kurbelwelle alternierend. Die zweiten Permanentmagnete sind entlang des kreisbogenförmigen inneren Ringabschnitts aneinandergrenzend angeordnet und weisen in eine gemeinsame Umfangsrichtung weisenden Nordpole aufweisen. Alternativ sind die zweiten Permanentmagnete entlang des kreisbogenförmigen inneren Ringabschnitts aneinandergrenzend angeordnet und haben in radiale Richtung weisende Pole mit abwechselnder Polungsausrichtung. Jede andere Art der Anordnung oder Ausrichtung der zweiten Permanentmagnete in der ersten äußeren Permanentmagneteinheit ist möglich, solange bei Rotation der ersten inneren Spuleneinheit ein derartiges relatives Wechselfeld auf diese Spuleneinheit wirkt, dass die beiden Einheiten gemeinsam eines elektromechanischen Wandler bilden.

Bisher wurde die Erfindung anhand einer Kurbelwelle mit einem einzigen, ersten Pleuellager, einem einzigen ersten Pleuel, der drehbar in dem ersten Pleuellager der Kurbelwelle gelagert ist, und einer einzigen ersten Kurbelwange, die zu dem ersten Pleuellager - bezogen auf die Kurbelwellenachse - axial benachbart ist, beschrieben, wobei die erfindungsgemäß an der ersten Kurbelwange angeordnete erste innere Magnetfeldeinheit und die erste äußere Magnetfeldeinheit gemeinsam einen ersten elektromechanischen Wandler bilden.

Vorzugsweise weist der Hubkolbenmotor jedoch zusätzlich einen zweiten elektromechanischen Wandler auf, der an der zweiten Kurbelwange des ersten Pleuellagers, die der ersten Kurbelwange axial gegenüberliegt, angeordnet ist, wobei dieser zweite elektromechanischen Wandler insbesondere die gleichen Merkmale wie der erste elektromechanische Wandler oder entsprechende erfindungsgemäße Variationen dieses ersten elektromechanische Wandlers aufweist. Auch die zweite Kurbelwange kann eine der ersten Kurbelwange entsprechende zweite Befestigungsfläche aufweisen, auf welcher ein dem ersten Ausgleichsgewicht entsprechendes zweites Ausgleichsgewicht angeordnet ist.

Im Speziellen umfasst der Hubkolbenmotor eine zweite innere Magnetfeldeinheit, die an einer zu dem ersten Pleuellager axial benachbarten und der ersten Kurbelwange axial gegenüberliegenden zweiten Kurbelwange der Kurbelwelle derart angeordnet ist, dass die zweite innere Magnetfeldeinheit in Bezug auf die Kurbelwellenachse radial nach außen weist und bei Rotation der Kurbelwelle um die Kurbelwellenachse auf einer zu dem Pleuelbewegungsraum axial benachbarten geometrischen zweiten Kreisbahn kreist. Eine zweite äußere Magnetfeldeinheit ist in der Kurbelkammer derart radial beabstandet zur zweiten Kreisbahn feststehend angeordnet, dass die zweite äußere Magnetfeldeinheit und die zweite innere Magnetfeldeinheit gemeinsam einen zweiten elektromechanischen Wandler bilden. Der Pleuelbewegungsraum des mindestens einen ersten Pleuels erstreckt sich in einem axialen Zwischenraum zwischen der ersten Kreisbahn und der zweiten Kreisbahn. Die zweite Kurbelwange hat auf einer in Bezug zu der Kurbelwellenachse radial nach außen weisenden und dem ersten Pleuellager gegenüberliegenden Seite eine zweite Befestigungsfläche. Ein zweites Ausgleichsgewicht ist an der zweiten Befestigungsfläche in radiale Richtung formschlüssig fixiert. Das zweite Ausgleichsgewicht besteht aus einem nichtmagnetisierbaren Werkstoff. Die zweite innere Magnetfeldeinheit ist auf einer radial nach außen weisenden Seite des zweiten Ausgleichsgewichts angeordnet. Insbesondere entspricht die zweite innere Magnetfeldeinheit der ersten inneren Magnetfeldeinheit. Insbesondere entspricht die zweite äußere Magnetfeldeinheit der ersten äußeren Magnetfeldeinheit. Insbesondere entspricht das zweite Ausgleichsgewicht dem ersten Ausgleichsgewicht.

An dem ersten Pleuellager können auch zwei erste Pleuel angeordnet sein, die nebeneinander drehbar in dem ersten Pleuellager der Kurbelwelle gelagert sind und die bei Rotation der Kurbelwelle gemeinsam eine Pleuelbewegung in zwei unterschiedlichen Pleuelbewegungsräumen, die den gemeinsamen geometrischen Pleuelbewegungsraum bilden, durchführen, wie dies insbesondere bei V-Motoren der Fall ist.

Die beschriebene Anordnung mit einem oder zwei elektromechanischen Wandlern pro Pleuellager, sowie ein oder zwei Pleuel pro Pleuellager kann auf jeden beliebigen Mehrzylindermotor in Reihen-, V-, VR-, W- oder sonstiger Bauweise erfindungsgemäß Anwendung finden, wobei entweder nur an einem Teil der Pleuellager oder an allen Pleuellagern der oder die elektromechanischen Wandler erfindungsgemäß angeordnet sind. Insbesondere ist diese Mehrzahl an elektromechanischen Wandlern abhängig vom Leistungsbedarf einzeln schaltbar.

Ein besonderer Vorteil der Erfindung besteht darin, dass der beschriebene elektrifizierte Hubkolbenmotor auf einem konventionellen, nicht-elektrifizierten, also ohne integriertem Elektromotor oder Generator ausgestatteten Verbrennungs-Hubkolbenmotor, insbesondere einem Otto- oder Diesel-Verbrennungsmotor, basieren kann. Somit ist es möglich, ein rein verbrennungsmotorisch angetriebenes Fahrzeug unter Verwendung des gleichen Basisverbrennungsmotors mit verhältnismäßig geringen Anpassungen des Hubkolbenmotors elektrisch anzutreiben und/oder mit einem zusätzlichen Generator auszustatten. Zur Integration des elektromechanischen Wandlers sind nur verhältnismäßig geringe Anpassungen am Hubkolbenmotor, hauptsächlich an dessen Kurbelwelle, erforderlich. Die erfindungsgemäße Kurbelwelle kann auf einer konventionellen Kurbelwelle basieren und insbesondere mittels spanender Bearbeitung hergestellt werden.

Ein weitere Vorteil der Erfindung besteht darin, dass der elektromechanischen Wandler vollständig im Kurbelgehäuse des Hubkolbenmotors intergrierbar ist, so dass zusätzliche Elektromotoren zum Antreiben des Fahrzeuges, insbesondere des Hybrid-Fahrzeuges, oder Generatoren zur Stromerzeugung entfallen können. Weiters kann auf eine externe Lichtmaschine verzichtet werden.

Der Hubkolbenmotor kann eine die Kurbelkammer abschließende Ölwanne umfassen und die Spuleneinheiten können in das in der Ölwanne befindliche Öl eingetaucht sein, womit eine Kühlung der Spuleneinheiten durch das in der Ölwanne enthaltene Öl und folglich eine Kühlung des elektromechanischen Wandlers erreicht wird.

Ein weiterer Aspekt der Erfindung sieht vor, dass die Kurbelwelle aus einem magnetisierbaren oder nichtmagnetisierbaren Werkstoff besteht, die erste Kurbelwange auf einer in Bezug zu der Kurbelwellenachse radial nach außen weisenden und dem ersten Pleuellager gegenüberliegenden Seite keine erste Befestigungsfläche aufweist, sondern einstückig mit dem ersten Ausgleichsgewicht ausgebildet ist, das erste Ausgleichsgewicht demgemäß wie auch die Kurbelwelle aus einem magnetisierbaren oder nichtmagnetisierbaren Werkstoff besteht, oder alternativ die erste Kurbelwange die beschriebene erste Befestigungsfläche aufweist, aber das Ausgleichsgewicht aus einem magnetisierbaren Werkstoff besteht, und wobei die erste innere Magnetfeldeinheit auf einer in Bezug zu der Kurbelwellenachse radial nach außen weisenden Seite des ersten Ausgleichsgewichts angeordnet ist, wobei die erste innere Magnetfeldeinheit die Form eines die erste Kurbelwange umgebenden kreisbogenförmigen inneren Ringabschnitts mit einer im Wesentlichen auf der Kurbelwellenachse liegenden geometrischen ersten Achse aufweist und sich der kreisbogenförmige innere Ringabschnitt mit einem ersten Mittelpunktswinkel von über 135°, insbesondere über 180°, insbesondere über 210° erstreckt, insbesondere wobei der erste Mittelpunktswinkel mindestens 60°, insbesondere mindestens 90°, insbesondere mindestens 120° größer ist als der Mittelpunktswinkel der Umfangserstreckung des Ausgleichsgewichts, insbesondere wobei der kreisbogenförmige innere Ringabschnitt ein- oder beidseitig um mindestens 30°, insbesondere mindestens 60°, insbesondere mindestens 90° über das erste Ausgleichsgewicht in Umfangsrichtung hinausragt. Insbesondere erstreckt sich der kreisbogenförmige innere Ringabschnitt mit einem ersten Mittelpunktswinkel von 360° und die erste innere Magnetfeldeinheit hat die Form eines die erste Kurbelwange umschließenden geschlossenen kreisförmigen inneren Rings. Die restlichen Merkmale des Hubkolbenmotors können wie eingangs beschrieben sein.

Insbesondere weist die erste innere Magnetfeldeinheit einen ringförmigen Träger aus einem magnetisierbaren oder nichtmagnetisierbaren Material auf, dessen spezifisches Gewicht geringer, insbesondere wesentlich geringer als das spezifische Gewicht des ersten Ausgleichsgewichts ist.

Insbesondere beträgt das spezifische Gewicht des ringförmigen Trägers höchstens 80%, 60%, 40% oder 20% des spezifischen Gewichts des Ausgleichsgewichts. An dem ringförmigen Träger sind entweder der mindestens eine Permanentmagnet, insbesondere die ersten Permanentmagnete, oder die mindestens eine erste Spule angeordnet. Beispielsweise besteht der ringförmige Träger aus mindestens einem der folgenden Werkstoffe: Kunststoff, Kohlefaser, Aluminium, Magnesium, Metalllegierung und/oder Keramik. Der ringförmige Träger ist derart ausgebildet, dass er die insbesondere über die Umfangserstreckung des Ausgleichsgewichts in Umfangrichtung hinausragende ringförmige Struktur statisch bei Rotation der Kurbelwelle innerhalb des Betriebsdrehzahlbereichs des Hubkolbenmotors aufrechterhält, so dass eine insbesondere aufgrund von Zentrifugalkraft hervorgerufene elastische oder plastische Verformung der ersten inneren Magnetfeldeinheit im erforderlichen Maße verhindert wird, um eine Kollision der ersten inneren Magnetfeldeinheit mit der ersten äußeren Magnetfeldeinheit während des Betriebs des Hubkolbenmotors zu verhindern.

Die Erfindung umfasst außerdem ein System aus dem beschriebenen erfindungsgemäßen Hubkolbenmotor, einem aufladbaren und entladbaren elektrischen Energiespeicher, einer elektrischen Steuerungseinheit und einem Kurbelwellensensor zur Erfassung einer Position der Kurbelwelle. Der Energiespeicher kann beispielsweise eine auf- und entladbare Batterie oder ein Kondensator sein. Die elektrische Steuerungseinheit kann insbesondere von einer elektronischen Steuerung, insbesondere einer Motorsteuerungseinheit gebildet werden. Der Kurbelwellensensor ist beispielsweise ein elektronischer Winkelsensor, mittels welchem die Winkelposition - insbesondere diskrete Winkelpositionsbereiche - der Kurbelwelle relativ zum Zylinderblock erfassbar und insbesondere mittels eines elektrischen Signals der Steuerungseinheit zuführbar sind.

Die Steuerungseinheit des Systems ist derart mit dem elektrischen Energiespeicher, dem ersten elektromechanischen Wandler und, sofern ein solcher vorhanden ist, dem zweiten oder jedem weiteren elektromechanischen Wandler elektrisch verschaltet und derart ausgebildet, insbesondere derart programmiert, dass der Hubkolbenmotor zwischen einer Elektromotorbetriebsart und einer Generatorbetriebsart umschaltbar ist.

In der Elektromotorbetriebsart ist die Kurbelwelle durch Entladen des elektrischen Energiespeichers elektromotorisch antreibbar, indem eine Spannung an den mindestens einen elektromechanischen Wandler, genauer an dessen mindestens eine Spuleneinheit, angelegt wird, so dass der Wandler als Elektromotor wirkt. In der Generatorbetriebsart ist der elektrische Energiespeicher durch mechanisches Antreiben der Kurbelwelle aufladbar, insbesondere durch verbrennungsmotorisches Antreiben der Kurbelwelle mittels des Hubkolbenmotors oder externes Antreiben der Kurbelwelle, beispielsweise mittels der Fahrzeugräder beim Verzögern des Fahrzeugs. Das Umschalten kann automatisch in Abhängigkeit von der Betriebart des Hubkolbenmotors, dessen verbrennungsmotorischen Leistung, dem Ladezustand des elektrischen Energiespeichers und/oder einer externen Benutzervorgabe erfolgen. Derartige automatische Umschaltsysteme sind insbesondere aus dem Bereich der Hybridfahrzeugtechnik bekannt.

Der Hubkolbenmotor besitzt einen derart ausgebildeten elektrisch ansteuerbaren variablen Auslassventiltrieb für mindestens ein erstes Auslassventil, welches einem ersten Verbrennungsraum eines mit dem mindestens einen ersten Pleuel gekoppelten ersten Kolbens zugeordnet ist, dass das mindestens eine erste Auslassventil unabhängig von der Stellung der Kurbelwelle öffenbar ist. Derartige variable und frei ansteuerbare Ventiltriebe, insbesondere elektromechanische, elektromagnetische oder pneumatische Ventiltriebe zum Öffnen und Schließen der Ein- und/oder Auslassventile eines Hubkolbenmotors sind in unterschiedlichen Ausführungsformen aus dem Stand der Technik bekannt.

Erfindungsgemäß ist die Steuerungseinheit derart mit dem Kurbelwellensensor und dem variablen Auslassventiltrieb verschaltet und derart ausgebildet, insbesondere derart programmiert, dass das mindestens eine erste Auslassventil in der Elektromotorbetriebsart in einem Positionsbereich der Kurbelwelle, in welchem sich der erste Kolben in einen Verdichtungstakt befindet, geöffnet ist. Insbesondere ist das erste Auslassventil während des gesamten Verdichtungstaktes und Ausstoßtakts des Kolbens, alternativ während eines Großteils des jeweiligen Takts, insbesondere mindestens 35%, 50%, 75% oder 90% des Taktes gemessen am Hub des Kolbens, geöffnet, so dass der Hubkolbenmotor elektromotorisch mit reduziertem Widerstand antreibbar ist. Insbesondere ist die Steuerungseinheit derart programmiert, dass das Auslassventil bei einem Winkelstellungsbereich der Kurbelwelle, welcher dem Verdichtungstakt und Ausstoßtakt entspricht, geöffnet ist oder wird. Dieser Aspekt der Erfindung ist erfindungsgemäß nicht nur mit dem erfindungsgemäßen beschriebenen Hubkolbenmotor, sondern allgemein in Kombination mit einem Hubkolbenmotor anwendbar, der eine beliebige Kurbelwelle aufweist, die mit einem beliebigen elektromechanischen Wandler, insbesondere einem Elektromotor oder einem elektrischen Generator, mechanisch gekoppelt ist, wobei die Kurbelwelle von dem elektromechanischen Wandler in einer Elektromotorbetriebsart antreibbar ist.

Außerdem umfasst die Erfindung ein weiteres System, das auf dem eingangs beschriebenen System basieren und dessen Merkmale aufweisen kann, jedoch darauf nicht notwendigerweise basieren muss und welches auch als eigenständiges System einsetzbar ist. Dieses weitere System umfasst einen Hubkolbenmotor, der insbesondere als einer der beschriebenen erfindungsgemäßen Hubkolbenmotoren ausgebildet ist, einen aufladbaren und entladbaren elektrischen Energiespeicher und einen Kurbelwellensensor zur Erfassung einer Position der Kurbelwelle, wie bereits in Zusammenhang mit dem obigen System beschrieben. Zusätzlich umfasst das System ein elektrisches Leistungsstellglied. Letzteres wird beispielsweise von einer elektrischen Steuerungseinheit, insbesondere der eingangs genannten elektrischen Steuerungseinheit, oder einer elektronischen Steuerung, insbesondere einer Motorsteuerungseinheit gebildet.

Der Hubkolbenmotor hat einen ersten Kolben, dem der auf der einen Seite des ersten Pleuellagers angeordnete erste elektromechanische Wandler und insbesondere der auf der anderen Seite des ersten Pleuellagers angeordnete zweite elektromechanische Wandler zugeordnet sind. Der erste Kolben ist mit dem mindestens einen ersten Pleuel, der drehbar in dem ersten Pleuellager der Kurbelwelle gelagert ist, gekoppelt. Außerdem hat der Hubkolbenmotor einen zweiten Kolben, dem ein auf der einen Seite eines zweiten Pleuellagers angeordneter dritter elektromechanischer Wandler und insbesondere ein auf der anderen Seite des zweiten Pleuellagers angeordneter vierter elektromechanischer Wandler zugeordnet sind. Der zweite Kolben ist mit mindestens einem zweiten Pleuel, der drehbar in dem zweiten Pleuellager der Kurbelwelle gelagert ist, gekoppelt. Insbesondere entspricht der dritte elektromechanische Wandler dem ersten elektromechanischen Wandler und der vierte elektromechanische Wandler dem zweiten elektromechanischen Wandler.

Das Leistungsstellglied ist derart mit dem elektrischen Energiespeicher, dem ersten elektromechanischen Wandler und dem dritten elektromechanischen Wandler, insbesondere auch mit dem zweiten elektromechanischen Wandler und/oder dem vierten elektromechanischen Wandler elektrisch verschaltet, insbesondere mittels einer elektronischen Signalverbindung, und derart ausgebildet, insbesondere derart programmiert, dass der Hubkolbenmotor in einer Elektromotorbetriebsart betreibbar. Alternativ ist das Leistungsstellglied derart ausgebildet und verschaltet, dass der Hubkolbenmotor in einer Generatorbetriebsart betreibbar ist. Alternativ ist das Leistungsstellglied derart ausgebildet und verschaltet, dass der Hubkolbenmotor entweder in einer Elektromotorbetriebsart oder in einer Generatorbetriebsart umschaltbar betreibbar ist. In der Elektromotorbetriebsart ist die Kurbelwelle durch Entladen des elektrischen Energiespeichers elektromotorisch mit einstellbarer Leistung antreibbar, indem mindestens einer der elektromechanischen Wandler mit Strom von dem elektrischen Energiespeicher versorgt wird und er als Elektromotor mit einstellbarer mechanischer Ausgangsleistung betrieben wird. Das Einstellen der Leistung erfolgt insbesondere stufenlos. In der Generatorbetriebsart ist der elektrische Energiespeicher durch mechanisches Antreiben der Kurbelwelle, insbesondere durch verbrennungsmotorisches Antreiben der Kurbelwelle mittels des Hubkolbenmotors oder externes Antreiben der Kurbelwelle, beispielsweise mittels der Fahrzeugräder beim Verzögern des Fahrzeugs mit einstellbarerer Leistung aufladbar, indem mindestens von einem der elektromechanischen Wandler ein Strom zum Aufladen des elektrischen Energiespeichers abgegriffen und er als Generator mit einstellbarer elektrischer Leistung betrieben wird.

Das Leistungsstellglied ist derart mit dem elektrischen Energiespeicher, dem ersten elektromechanischen Wandler, dem dritten elektromechanischen Wandler und dem Kurbelwellensensor, insbesondere auch mit dem zweiten elektromechanischen Wandler und/oder dem vierten elektromechanischen Wandler elektrisch verschaltet und derart ausgebildet, insbesondere derart programmiert, dass die Leistung auf den ersten elektromechanischen Wandler, insbesondere auch auf den zweiten elektromechanischen Wandler, mit einem ersten Leistungsanteil, sowie den dritten elektromechanischen Wandler, insbesondere auch den vierten elektromechanischen Wandler, mit einem zweiten Leistungsanteil verteilbar ist. Somit sind der erste Leistungsanteil dem ersten Pleuellager und der zweite Leistungsanteil dem zweiten Pleuellager zugeordnet. Die Gewichtung der beiden Leistungsanteile, in anderen Worten der Anteil des ersten Leistungsanteils und des zweiten Leistungsanteils an der variablen Leistung, ist also mittels des Leistungsstellglieds ebenfalls variabel.

Das Leistungsstellglied ist derart ausgebildet, dass das Verteilen der Leistung auf den ersten elektromechanischen Wandler und den dritten elektromechanischen Wandler in Abhängigkeit von der Position der Kurbelwelle erfolgt. In anderen Worten ist das Leistungsstellglied derart ausgebildet, dass die Gewichtung der beiden Leistungsanteile, also der Anteil des ersten Leistungsanteils und des zweiten Leistungsanteils an der variablen Leistung, mittels des Leistungsstellglieds in Abhängigkeit von der Position der Kurbelwelle erfolgt.

Somit ist es möglich, das an dem ersten Pleuellager und das an dem zweiten Pleuellager mittels der elektromechanischen Wandel aufgebrachte bzw. abgegriffene Drehmoment und/oder die dort hierdurch auf die Kurbelwelle in Richtung senkrecht zur Kurbelwellenachse aufgebrachte seitliche Kraft in Abhängigkeit von der Position der Kurbelwelle zu steuern. Letzteres in insbesondere möglich, wenn die elektromechanischen Wandel derart ausgebildet sind, dass das jeweilige Magnetfeld eine seitliche Kraft auf die Kurbelwelle bei den jeweiligen Pleuellagern ausübt, insbesondere wenn die inneren und/oder äußeren Magnetfeldeinheiten die Kurbelwelle nicht vollständig umschließen, sondern insbesondere nur einseitig umgeben, insbesondere mit einer Umschließung von unter 360° oder 270°. Dies ist insbesondere der Fall, wenn die inneren Magnetfeldeinheiten jeweils die Form eines die jeweiligen Kurbelwangen umgebenden kreisbogenförmigen inneren Ringabschnitts aufweisen und sich der jeweilige kreisbogenförmige innere Ringabschnitt mit einem ersten Mittelpunktswinkel von unter 360° oder 270° erstreckt, und/oder wenn die äußeren Magnetfeldeinheiten jeweils die Form eines die erste Kreisbahn der ersten inneren Magnetfeldeinheit radial beabstandet umgebenden kreisbogenförmigen äußeren Ringabschnitts aufweisen und sich der jeweilige kreisbogenförmige äußere Ringabschnitt mit einem zweiten Mittelpunktswinkel von unter 360° oder 270° erstreckt. Der nicht-umschließende Abschnitt der Magnetfeldeinheit weist vorzugsweise zu dem jeweiligen Kolben oder von diesem Kolben weg.

Im Falle einer solchen unvollständigen Umschließung der Kurbelwelle üben die Magnetfeldeinheiten bei Leistungsabgabe oder -aufnahme eine seitliche Kraft senkrecht zur Kurbelwellenachse auf die Kurbelwelle aus. Diese seitliche Kraft kann genutzt werden, um hervorgerufene Massenkräfte und -momente höherer Ordnung, insbesondere zweiter Ordnung, an der Kurbelwelle zu reduzieren oder ausgleichen. Insbesondere können Taumelmomente, welche in Richtung parallel zu der Hubbewegung der Kolben auf die Kurbelwelle wirken, beispielsweise bei einem Vierzylinder-Reihenmotor, ausgeglichen werden. Daher sieht eine Weiterbildung der Erfindung vor, dass das Verteilen der Leistung in Abhängigkeit von der Position der Kurbelwelle derart erfolgt, dass durch die Bewegung der Kurbelwelle, des mindestens einen ersten Pleuels, des mindestens einen zweiten Pleuels, des ersten Kolbens und/oder des zweiten Kolbens hervorgerufene Massenkräfte und -momente höherer Ordnung, insbesondere zweiter Ordnung, insbesondere Taumelmomente in senkrechter Richtung zur Kurbelwellenachse, reduziert oder ausgeglichen werden.

Der erfindungsgemäße Hubkolbenmotor und die erfindungsgemäßen Systeme werden nachfolgend anhand von in den Zeichnungen schematisch dargestellten konkreten Ausführungsbeispielen rein beispielhaft näher beschrieben.

Im Einzelnen zeigen:
- Figur 1a: ein erstes Ausführungsbeispiel des erfindungsgemäßen Hubkolbenmotors mit geschlossenen ringförmigen inneren Permanentmagneteinheiten und kreisbogenförmigen äußeren Spuleneinheiten in einer Schrägansicht;
- Figur 1b: das erste Ausführungsbeispiel, eingebunden in ein System, in einer vorderen Querschnittsansicht;
- Figur 1c: das erste Ausführungsbeispiel mit dem Kolben im unteren Totpunkt in einer seitlichen Querschnittsansicht;
- Figur 1d: das erste Ausführungsbeispiel mit dem Kolben im oberen Totpunkt in einer seitlichen Querschnittsansicht;
- Figur 1e: die Kurbelwelle des ersten Ausführungsbeispiels ohne Ausgleichsgewichte in einer Schrägansicht;
- Figur 1f: ein Ausgleichsgewicht des ersten Ausführungsbeispiels in einer Schrägansicht;
- Figur 1g: die Kurbelwelle des ersten Ausführungsbeispiels mit Ausgleichsgewichten in einer Schrägansicht;
- Figur 1h: die Kurbelwelle des ersten Ausführungsbeispiels mit Ausgleichsgewichten und den ringförmigen inneren Permanentmagneteinheiten in einer Schrägansicht;
- Figur 1i: die ringförmige innere Permanentmagneteinheit des ersten Ausführungsbeispiels mit aneinandergrenzend angeordneten ersten Permanentmagneten mit in eine gemeinsame Umfangsrichtung weisenden Nordpolen in einer Schrägansicht;
- Figur 1j: die kreisbogenförmige äußere Spuleneinheit des ersten Ausführungsbeispiels mit einem zweiten Mittelpunktswinkel von 180° mit einer zweiten Spule mit einer parallel zu der Kurbelwellenachse verlaufenden zweiten Spulenachse in einer Schrägansicht;
- Figur 2a: eine erste alternative Ausführungsform der Kurbelwelle mit kreisbogenförmigen inneren Permanentmagneteinheiten mit einem ersten Mittelpunktswinkel von 180° in einer Schrägansicht;
- Figur 2b: die kreisbogenförmige innere Permanentmagneteinheit der ersten alternativen Ausführungsform der Kurbelwelle mit einem ersten Mittelpunktswinkel von 180° in einer Schrägansicht;
- Figur 3a: ein zweites Ausführungsbeispiel des erfindungsgemäßen Hubkolbenmotors mit geschlossenen ringförmigen inneren Permanentmagneteinheiten und kreisbogenförmigen äußeren Spuleneinheiten in einer Schrägansicht;
- Figur 3b: die Kurbelwelle des zweiten Ausführungsbeispiels mit Ausgleichsgewichten und den ringförmigen inneren Permanentmagneteinheiten in einer Schrägansicht;
- Figur 3c: die ringförmige innere Permanentmagneteinheit des zweiten Ausführungsbeispiels mit aneinandergrenzend angeordneten ersten Permanentmagneten mit in radiale Richtung weisenden Polen mit abwechselnder Polungsausrichtung in einer Schrägansicht;
- Figur 3d: die kreisbogenförmige äußere Spuleneinheit des zweiten Ausführungsbeispiels mit einem zweiten Mittelpunktswinkel von 180° mit einer zweiten Spule mit einer in Kreisumfangsrichtung verlaufenden zweiten Spulenachse in einer Schrägansicht;
- Figur 4a: ein drittes Ausführungsbeispiel des erfindungsgemäßen Hubkolbenmotors mit geschlossenen ringförmigen inneren Permanentmagneteinheiten und geschlossenen ringförmigen äußeren Spuleneinheiten in einer Schrägansicht;
- Figur 4b: die Kurbelwelle des dritten Ausführungsbeispiels mit Ausgleichsgewichten und den ringförmigen inneren Permanentmagneteinheiten in einer Schrägansicht;
- Figur 4c: die ringförmige innere Permanentmagneteinheit des dritten Ausführungsbeispiels mit aneinandergrenzend angeordneten ersten Permanentmagneten mit in radiale Richtung weisenden Polen mit abwechselnder Polungsausrichtung in einer Schrägansicht;
- Figur 4d: die ringförmige äußere Spuleneinheit des dritten Ausführungsbeispiels mit in Kreisumfangsrichtung aneinander gereihten zweiten Spulen mit in Bezug auf die Kurbelwellenachse radial verlaufenden zweiten Spulenachsen in einer seitlichen Querschnittsansicht;
- Figur 5a: ein viertes Ausführungsbeispiel des erfindungsgemäßen Hubkolbenmotors mit geschlossenen ringförmigen inneren Permanentmagneteinheiten und geschlossenen ringförmigen äußeren Spuleneinheiten in einer Schrägansicht;
- Figur 5b: die ringförmige äußere Spuleneinheit des vierten Ausführungsbeispiels mit einer zweiten Spule mit einer parallel zu der Kurbelwellenachse verlaufenden zweiten Spulenachse in einer Schrägansicht;
- Figur 6: eine zweite alternative Ausführungsform mit einer ringförmigen inneren Spuleneinheit mit in Kreisumfangsrichtung aneinander gereihten ersten Spulen mit in Bezug auf die Kurbelwellenachse radial verlaufenden ersten Spulenachsen, sowie mit einer ringförmigen äußeren Permanentmagneteinheit mit aneinandergrenzend angeordneten zweiten Permanentmagneten mit in radiale Richtung weisenden Polen mit abwechselnder Polungsausrichtung in einer seitlichen Querschnittsansicht;
- Figur 7a: eine dritte alternative Ausführungsform mit einer ringförmigen inneren Spuleneinheit mit in Kreisumfangsrichtung aneinander gereihten ersten Spulen mit in Bezug auf die Kurbelwellenachse radial verlaufenden ersten Spulenachsen, sowie mit einer ringförmigen äußeren Spuleneinheit mit in Kreisumfangsrichtung aneinander gereihten zweiten Spulen mit in Bezug auf die Kurbelwellenachse radial verlaufenden zweiten Spulenachsen in einer seitlichen Querschnittsansicht; und
- Figur 7b: eine mit einer ersten Spule verbundene Zusatzspule der inneren Spuleneinheit und eine seitliche Spule in einer Querschnittsdarstellung A-A aus Figur 7a.

Da die Figuren zum Teil das gleiche Ausführungsbeispiel aus unterschiedlichen Ansichten und in unterschiedlichen Detaillierungsgraden zeigen und sich die Ausführungsbeispiele zum Teil nur in bestimmten Merkmalen unterscheiden, wird in der folgenden Figurenbeschreibung zum Teil auf die erneute Erläuterung bereits zuvor genannter Bezugszeichen und Merkmale verzichtet und es wird teilweise nur auf die Unterschiede der einzelnen Ausführungsbeispiele eingegangen.

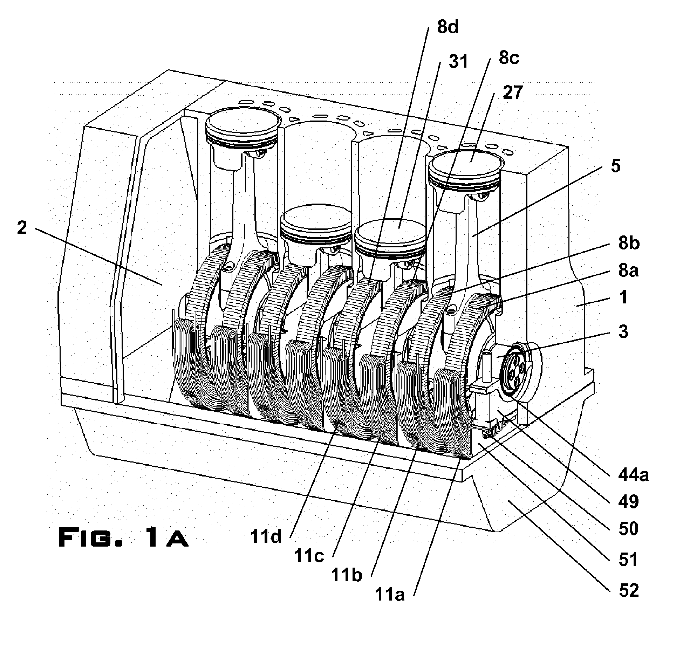

In den Figuren 1a bis 1j ist ein erstes Ausführungsbeispiel des erfindungsgemäßen Hubkolbenmotors aus unterschiedlichen Ansichten und in unterschiedlichen Detaillierungsgraden dargestellt. Diese Figuren werden im Folgenden gemeinsam erläutert.

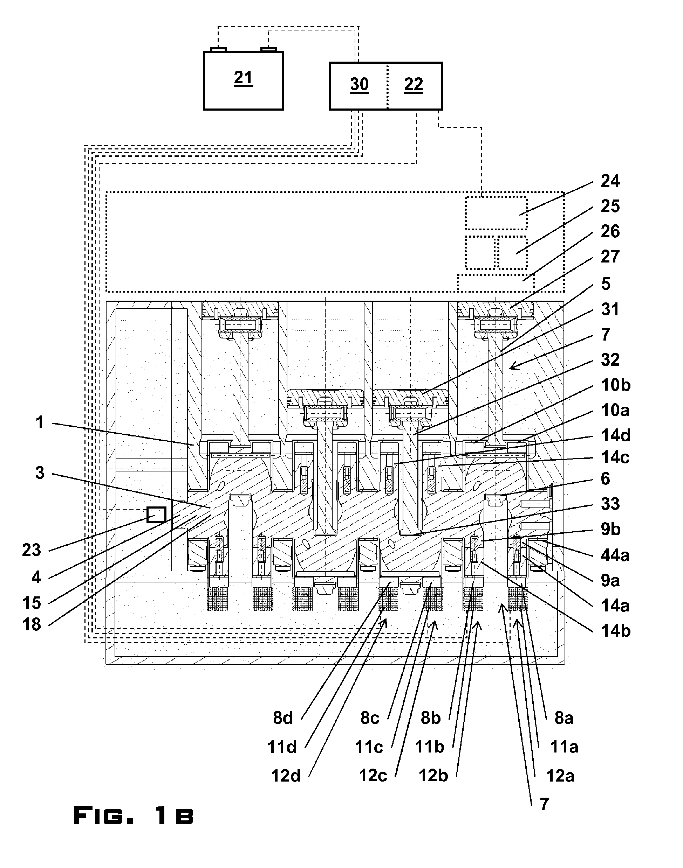

Der Hubkolbenmotor des ersten Ausführungsbeispiels ist ein Vierzylinder-Reihenmotor, der nach dem Otto-Prinzip arbeitet, wie in Figur 1a und 1b gezeigt. Der Hubkolbenmotor setzt sich im Wesentlichen aus einem Zylinderblock 1, einer teilweise in dem Zylinderblock 1 ausgeformten Kurbelkammer 2, die unten von einer Ölwanne 52 begrenzt wird, einer Kurbelwelle 3, sowie vier Kolben 27 und 31, die mittels vier Pleuel 5 und 32 mit der Kurbelwelle 3 verbunden sind, zusammen. Im Folgenden werden zur Vereinfachung zum Teil nur der erste Kolben 27 und der zweite Kolben 31 sowie deren Peripherie beschrieben.

Die Kurbelwelle 3 ist innerhalb der Kurbelkammer 2 in insgesamt fünf Hauptlagern 44a und 44b um eine geometrische Kurbelwellenachse 4 rotierbar angeordnet und wird dort mittels fünf Lagerdeckeln 49, die mittels Lagerdeckelschrauben 50 am Zylinderblock 1 fixiert sind, dargestellt in Figur 1a, gehalten.

Die Kurbelwelle 3 ist einstückig aus einem magnetisierbaren Werkstoff ausgebildet.

Der erste Pleuel 5 ist drehbar in einem ersten Pleuellager 6 der Kurbelwelle 3 gelagert und führt bei Rotation der Kurbelwelle 3 eine Pleuelbewegung in einem geometrischen Pleuelbewegungsraum 7 durch. Der erste Kolben 27 ist in einem Pleuelauge des ersten Pleuels 5 gelagert, wie in den Figuren 1a und 1b gezeigt.

Der zweite Pleuel 32 ist drehbar in einem zweiten Pleuellager 33 der Kurbelwelle 3 gelagert und führt bei Rotation der Kurbelwelle 3 ebenfalls eine Pleuelbewegung in einem geometrischen Pleuelraum durch.

Nämliches gilt für die weiteren Pleuel, Pleuellager und Kolben. Im Folgenden wird deren Anordnung zum Teil nur anhand des ersten Pleuels 5, des ersten Pleuellagers 6 und des ersten Kolbens 27 beschrieben.

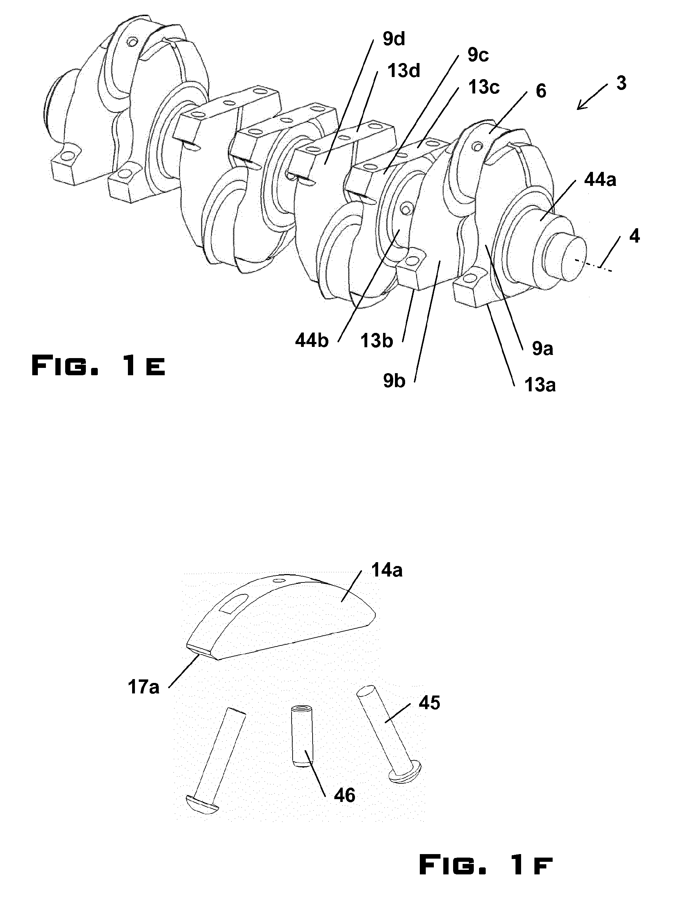

Das erste Pleuellager 6 der Kurbelwelle 3 ist über eine erste Kurbelwange 9a mit dem benachbarten ersten Hauptlager 44a und über eine der ersten Kurbelwange 9a gegenüberliegende zweite Kurbelwange 9b mit dem zweiten Hauptlager 44b verbunden, wobei die Kurbelwangen 9a und 9b den radialen Versatz des ersten Pleuellagers 6 in Bezug auf die Kurbelwellenachse 4 bewirken, wie in Figur 1e gezeigt.

Die erste Kurbelwange 9a hat auf einer in Bezug zu der Kurbelwellenachse 4 radial nach außen weisenden und dem ersten Pleuellager 6 gegenüberliegenden Seite eine erste Befestigungsfläche 13a. Auch die zweite Kurbelwange 9b besitzt auf einer in Bezug zu der Kurbelwellenachse 4 radial nach außen weisenden und dem ersten Pleuellager 6 gegenüberliegenden Seite eine zweite Befestigungsfläche 13b, wie in Figur 1e dargestellt. Die Befestigungsflächen 13a und 13b, welche dem ersten Pleuellager 6 gegenüberliegen, sind eben und liegen auf einer gemeinsamen Ebene. Entsprechend liegen auch den restlichen Pleuellagern der Kurbelwelle 3 jeweils zwei Befestigungsflächen gegenüber, wie beispielsweise dem zweiten Pleuellager 33 mit der dritten Kurbelwange 9c die dritte Befestigungsfläche 13c und mit der vierten Kurbelwange 9d die vierte Befestigungsfläche 13c, entsprechend Figur 1e.

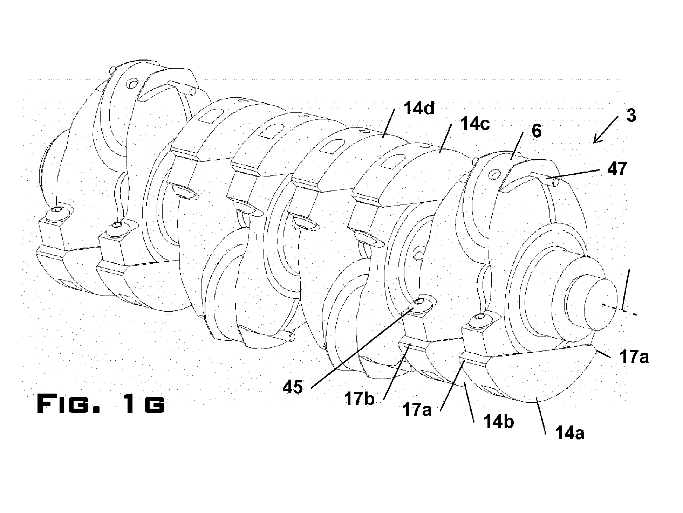

An der ersten Befestigungsfläche 13a ist ein erstes Ausgleichsgewicht 14a, an der zweiten Befestigungsfläche 13b ein zweites Ausgleichsgewicht 14b, an der dritten Befestigungsfläche 13c ein drittes Ausgleichsgewicht 14c und an der vierten Befestigungsfläche 13d ein viertes Ausgleichsgewicht 14d in radiale Richtung formschlüssig fixiert. Gleiches gilt für die übrigen Befestigungsflächen. Die formschlüssige Fixierung der Ausgleichsgewichte 14a, 14b, 14c und 14d an den Befestigungsflächen 13a, 13b, 13c und 13d erfolgt jeweils mittels zweier Ausgleichsgewichtsschrauben 45, wobei das jeweilige Ausgleichsgewicht 14a, 14b, 14c und 14d mittels eines Zentrierbolzens 46 auf der jeweiligen Befestigungsflächen 13a, 13b, 13c und 13d zentriert wird, wie in den Figuren 1f und 1g gezeigt. Die Ausgleichsgewichte 14a, 14b, 14c und 14d bestehen, wie auch die übrigen Ausgleichsgewichte, aus einem nichtmagnetisierbaren Werkstoff, beispielsweise Gusseisen, Edelstahl, Kohlefaser, einem keramischen Werkstoff oder Aluminium. Alle Ausgleichsgewichte entsprechen einander.

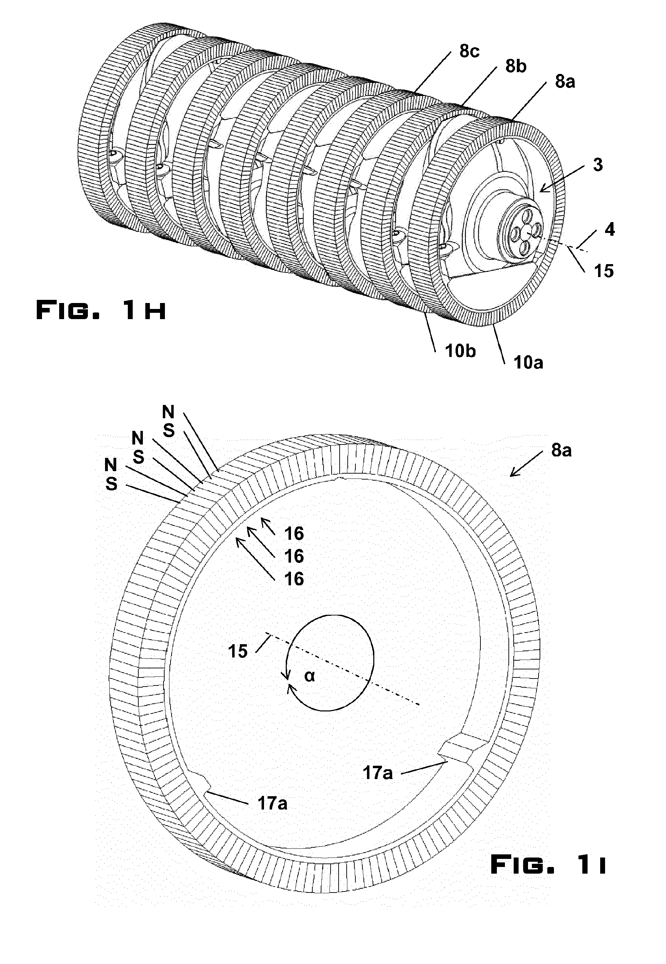

Eine erste innere Magnetfeldeinheit 8a ist auf einer in Bezug zu der Kurbelwellenachse 4 radial nach außen weisenden Seite des ersten Ausgleichsgewichts 14a angeordnet ist. Somit ist die erste innere Magnetfeldeinheit 8a an der zu dem ersten Pleuellager 6 axial benachbarten ersten Kurbelwange 9a der Kurbelwelle 3 über das erste Ausgleichsgewicht 14a indirekt angeordnet, wie in den Figuren 1b und 1h gezeigt.

Dieser Anordnung entsprechend ist eine zweite innere Magnetfeldeinheit 8b an der zu dem ersten Pleuellager 6 axial benachbarten und der ersten Kurbelwange 9a axial gegenüberliegenden zweiten Kurbelwange 9b der Kurbelwelle 3 angeordnet, indem die zweite innere Magnetfeldeinheit 8b auf der radial nach außen weisenden Seite des zweiten Ausgleichsgewichts 14b fixiert ist.

Dementsprechend sind auch an den übrigen Ausgleichsgewichten innere Magnetfeldeinheiten angeordnet, beispielsweise eine dritte Magnetfeldeinheit 8c, wie ebenfalls in den Figuren 1b und 1h gezeigt.

Die inneren Magnetfeldeinheiten 8a, 8b und 8c sind jeweils in eine sich in axiale Richtung, also parallel zur Kurbelwellenachse 4 erstreckende erste Linearführung 17a bzw. zweite Linearführung 17b bzw. dritte Linearführung 17c auf dem jeweiligen Ausgleichsgewicht 14a bzw. 14b bzw. 14c aufgeschoben und dort axial fixiert, so dass sie sich nicht verschieben können, wie in den Figuren 1b und 1h gezeigt. Die Linearführungen 17a, 17b und 17c fixieren die jeweiligen innere Magnetfeldeinheit 8a, 8b bzw. 8c bezogen auf die Kurbelwellenachse 4 in radiale Richtung, also nach außen in Zentrifugalrichtung, und Umfangsrichtung, also rotatorisch, formschlüssig durch eine Hinterschneidung. Eine Detailansicht auf die erste Linearführung 17a, welche in der ersten inneren Magnetfeldeinheit 8a und dem ersten Ausgleichsgewicht 14a ausgeformt ist, zeigen die Figuren 1f, 1g und 1i. Die zweite Linearführung 17b des zweiten Ausgleichsgewichts 14b zeigt Figur 1g.

Die ersten inneren Magnetfeldeinheiten 8a, 8b und 8c haben die Form eines die jeweilige Kurbelwange 9a, 9b bzw. 9c umschließenden geschlossenen kreisförmigen inneren Rings mit einer auf der Kurbelwellenachse 4 liegenden geometrischen ersten Achse 15. In anderen Worten haben sie die Form eines die jeweilige Kurbelwange 9a, 9b bzw. 9c umgebenden kreisbogenförmigen inneren Ringabschnitts mit einer gemeinsamen, auf der Kurbelwellenachse 4 liegenden geometrischen ersten Achse 15, wobei sich der kreisbogenförmige innere Ringabschnitt mit einem ersten Mittelpunktswinkel α von 360° erstreckt, so dass der jeweilige Kreisbogen zu einem Ring geschlossen ist, wie in Figur 1i gezeigt.

Zu besseren Stabilisierung aller ringförmigen inneren Magnetfeldeinheiten 8a, 8b und 8c sind diese mittels Stabilisierungsbolzen 47 mit dem jeweiligen Pleuellager 6 verbunden, Figur 1g.

Alle inneren Magnetfeldeinheiten, im vorliegenden Ausführungsbeispiel acht innere Magnetfeldeinheiten, entsprechen einander, Figur 1h.

Die inneren Magnetfeldeinheiten 8a, 8b und 8c sind permanentmagnetisch und jeweils als innere Permanentmagneteinheit 8a, 8b bzw. 8c ausgebildet. So hat die erste innere Permanentmagneteinheit 8a, bezogen auf die Kurbelwellenachse 4, eine Vielzahl an in Kreisumfangsrichtung aneinander gereihte erste Permanentmagnete 16, wobei diese ersten Permanentmagnete 16 entlang des kreisförmigen inneren Rings aneinandergrenzend angeordnet sind und in eine gemeinsame Umfangsrichtung weisende Nordpole N aufweisen, sodass die magnetische Polung der ersten Permanentmagnete 16 in Kreisumfangsrichtung zur Erzeugung eines magnetischen Wechselfeldes bei Rotation der Kurbelwelle 3 alternierend ist, wie in Figur 1i gezeigt. In anderen Worten werden die Permanentmagneteinheiten 8a, 8b bzw. 8c von Magnetringen gebildet, die entlang des Ringumfangs eine Vielzahl an sich abwechselnden magnetischen Nordpolen N und Südpolen S aufweisen, so dass in Kreisumfangsrichtung Nordpole N und Südpole S einander abwechseln.

Somit weisen die erste innere Magnetfeldeinheit 8a, die zweite innere Magnetfeldeinheit 8b und die dritte innere Magnetfeldeinheit 8c in Bezug auf die Kurbelwellenachse 4 radial nach außen. Außerdem kreisen sie bei Rotation der Kurbelwelle 3 um die Kurbelwellenachse 4 jeweils auf einer zu dem Pleuelbewegungsraum 7 axial benachbarten geometrischen Kreisbahn, nämlich die erste innere Magnetfeldeinheit 8a auf der ersten Kreisbahn 10a und die zweite innere Magnetfeldeinheit 8b auf der zweiten Kreisbahn 10b, wie in den Figuren 1b und 1h gezeigt.

In dem axialen Zwischenraum zwischen der ersten Kreisbahn 10a und der zweiten Kreisbahn 10b befindet sich der Pleuelbewegungsraum 7 des ersten Pleuels 5, wie in Figur 1b veranschaulicht. Entsprechendes gilt für die restlichen Pleuel.

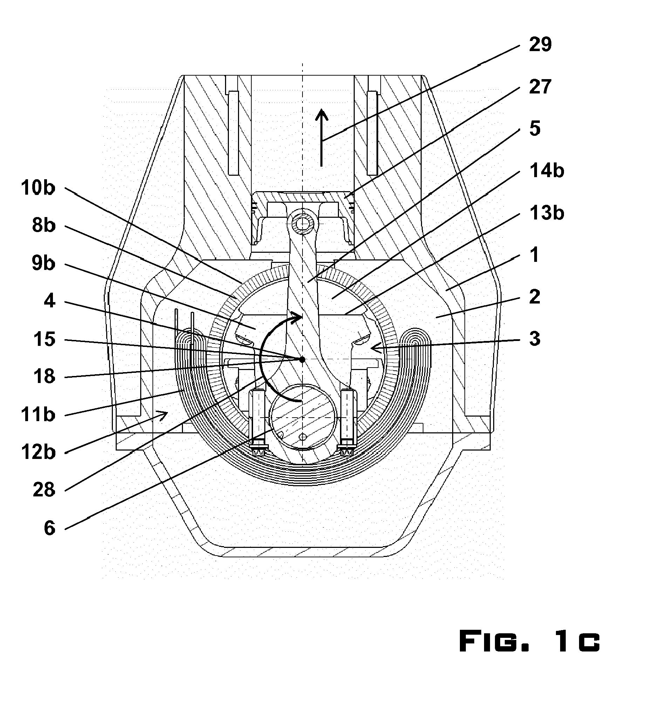

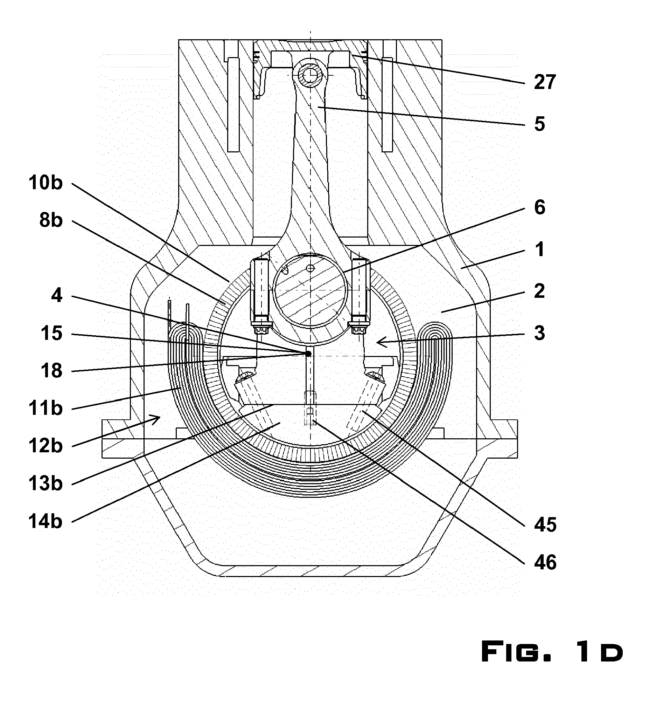

Radial beabstandet zur ersten Kreisbahn 10a der ringförmigen ersten innere Permanentmagneteinheit 8a ist eine erste äußeren Magnetfeldeinheit 11a in der Kurbelkammer 2 feststehend angeordnet. Parallel beabstandet zur ersten äußeren Magnetfeldeinheit 11a ist ebenfalls feststehend in der Kurbelkammer 2 eine zweite äußere Magnetfeldeinheit 11b vorgesehen, welche die zweite Kreisbahn 10b der ringförmigen zweiten innere Permanentmagneteinheit 8b radial beabstandet umgibt, wie in den Figuren 1a, 1b, 1c und 1d veranschaulicht. Dementsprechend ist jeder inneren Permanentmagneteinheit eine äußere Magnetfeldeinheit zugeordnet.

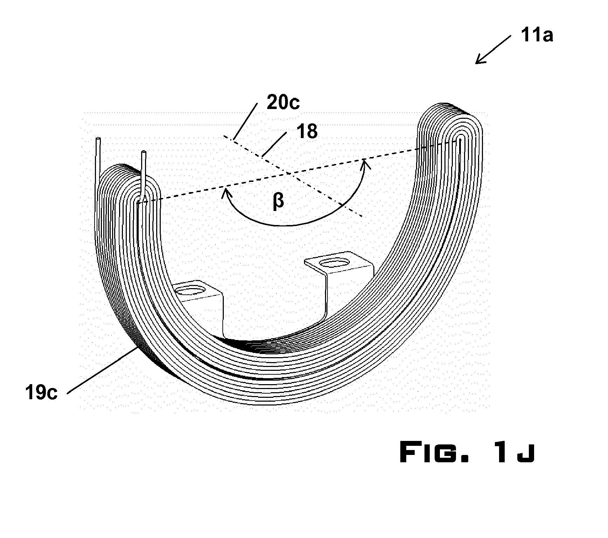

Alle äußeren Magnetfeldeinheiten 11a, 11b, 11c und 11d haben die Form eines die jeweilige Kreisbahn der jeweiligen inneren Magnetfeldeinheit 8a, 8b, 8c bzw. 8d radial beabstandet umgebenden kreisbogenförmigen äußeren Ringabschnitts mit einer auf der Kurbelwellenachse 4 liegenden geometrischen zweiten Achse 18, Figuren 1a, 1c, 1d und 1j. Dieser jeweilige kreisbogenförmige äußere Ringabschnitt hat einen zweiten Mittelpunktswinkel β von 180°, wie in Figur 1j dargestellt.

Alle äußeren Magnetfeldeinheiten 11a, 11b, 11c und 11d sind elektromagnetisch und als äußere Spuleneinheit 11a, 11b, 11c bzw. 11d ausgebildet. Diese haben jeweils eine zweite Spule 19c, deren zweite Spulenachse 20c parallel zu der Kurbelwellenachse 4 verläuft, Figur 1j.

Die erste innere Permanentmagneteinheit 8a und die erste äußere Spuleneinheit 11a sind somit derart angeordnet und ausgebildet, dass sie gemeinsam einen ersten elektromechanischen Wandler 12a bilden. Bei Rotation der Kurbelwelle 3 und somit auch der ersten inneren Permanentmagneteinheit 8a entsteht in der ersten äußeren Spuleneinheit 11a ein magnetisches Wechselfeld, wodurch eine Wechselspannung in die zweite Spule 19c induziert wird. Diese Spannung kann beispielsweise zum Aufladen eines elektrischen Energiespeichers genutzt werden. Der erste elektromechanische Wandler 12a ist in diesem Falle ein elektrischer Generator.

Umgekehrt kann durch Anlegen einer Wechselspannung an die zweite Spule 19c der ersten äußeren Spuleneinheit 11a eine magnetische Kraft auf die erste innere Permanentmagneteinheit 8a ausgeübt werden, so dass die erste innere Permanentmagneteinheit 8a und somit auch die Kurbelwelle 3 in Rotation gebracht werden kann. Der erste elektromechanische Wandler 12a bildet in diesem Falle einen Elektromotor.

Entsprechendes gilt für die zweite innere Permanentmagneteinheit 8a und die zweite äußere Spuleneinheit 11a, die dritte innere Permanentmagneteinheit 8a und die dritte äußere Spuleneinheit 11a, sowie die vierte innere Permanentmagneteinheit 8a und die vierte äußere Spuleneinheit 11a, welche jeweils einen zweiten elektromechanischen Wandler 12b, einen dritten elektromechanischen Wandler 12c bzw. einen vierten elektromechanischen Wandler 12d bilden.

Der Hubkolbenmotor hat einen elektrisch ansteuerbaren variablen Auslassventiltrieb 24 für ein erstes Auslassventil 25, das einem ersten Verbrennungsraum 26 des ersten Kolbens 27 zugeordnet ist, und für jedes weitere Auslassventil der restlichen Kolben. Der variable Auslassventiltrieb 24 ist derart ausgebildet, dass das erste Auslassventil 25 und jedes weitere Auslassventil unabhängig von der Stellung der Kurbelwelle 3 geöffnet werden können.

Der Hubkolbenmotor ist in ein in Figur 1b schematisch veranschaulichtes System eingebunden, welches einen aufladbaren und entladbaren elektrischen Energiespeicher 21, eine elektrische Steuerungseinheit 22, ein elektrisches Leistungsstellglied 30 und einen Kurbelwellensensor 23 zur Erfassung einer Winkelposition der Kurbelwelle 3 umfasst.

Die Steuerungseinheit 22 ist mit dem elektrischen Energiespeicher 21, dem ersten elektromechanischen Wandler 12a, dem zweiten elektromechanischen Wandler 12b und allen weiteren elektromechanischen Wandlern elektrisch verschaltet. Außerdem ist die Steuerungseinheit 22 derart ausgebildet, dass der Hubkolbenmotor zwischen einer Elektromotorbetriebsart und einer Generatorbetriebsart umschaltbar ist. In der Elektromotorbetriebsart wird die Kurbelwelle 3 durch Entladen des elektrischen Energiespeichers 21 elektromotorisch angetrieben. In der Generatorbetriebsart wird der elektrische Energiespeicher 21 durch mechanisches Antreiben der Kurbelwelle 3, beispielsweise durch verbrennungsmotorisches Antreiben der Kurbelwelle 3 mittels des Hubkolbenmotors oder durch externen Antrieben der Kurbelwelle 3, aufgeladen.

Die Steuerungseinheit 22 ist derart mit dem Kurbelwellensensor 23 und dem variablen Auslassventiltrieb 24 verschaltet und derart ausgebildet, dass das erste Auslassventil 25 in der Elektromotorbetriebsart in einem Positionsbereich 28 der Kurbelwelle 3, in welchem sich der erste Kolben 27 in einem Verdichtungstakt 29 befindet, geöffnet ist, dargestellt durch die Pfeile 28 und 29 in Figur 1c. Der Verdichtungstakt in derjenige Positionsbereich 28 der Kurbelwelle 3, in welchem der erste Kolben 27 eine Bewegung 29 vom unteren Totpunkt des ersten Kolbens 27, dargestellt in Figur 1c, in Richtung zum oberen Totpunkt des ersten Kolbens 27, dargestellt in Figur 1d, durchführt. Entsprechendes gilt für die weiteren Kolben und die ihnen zugeordneten Auslassventile.

Mittels dieser Maßnahme wird erreicht, dass in der Elektromotorbetriebsart kein Komprimieren bzw. Verdichten im jeweiligen Verbrennungsraum 26 erfolgen muss und das Schleppmoment des Hubkolbenmotors reduziert werden kann.

Das Leistungsstellglied 30 ist mit dem elektrischen Energiespeicher 21, dem ersten elektromechanischen Wandler 12a, dem zweiten elektromechanischen Wandler 12b, dem dritten elektromechanischen Wandler 12c, dem vierten elektromechanischen Wandler 12d und jedem weiteren elektromechanischen Wandler elektrisch verschaltet. Das Leistungsstellglied 30 ist zudem derart ausgebildet, dass in der Elektromotorbetriebsart die Kurbelwelle 3 durch Entladen des elektrischen Energiespeichers 21 elektromotorisch mit einstellbarer Leistung angetrieben werden kann und in der Generatorbetriebsart der elektrische Energiespeicher 21 durch das mechanische Antreiben der Kurbelwelle 3 mit einstellbarerer Leistung aufgeladen werden kann.

Das Leistungsstellglied 30 kann funktionaler Bestandteil der Steuerungseinheit 22 sein, und umgekehrt.

Das Leistungsstellglied 30 ist derart mit dem elektrischen Energiespeicher 21, allen elektromechanischen Wandlern und dem Kurbelwellensensor 23 elektrisch verschaltet und derart ausgebildet, dass die Leistung auf die jeweils einem Kolben zugeordneten elektromechanischen Wandlerpaare 12a und 12b, 12c und 12d, etc. mit einem unterschiedlichen Leistungsanteil verteilt werden kann, so dass den Kolben eine unterschiedliche elektrische Leistung zugeordnet werden kann. Das Verteilen der Leistung auf die Wandlerpaare 12a und 12b, 12c und 12d, etc. erfolgt in Abhängigkeit von der Position der Kurbelwelle 3. Insbesondere erfolgt das Verteilen der Leistung in Abhängigkeit von der Position der Kurbelwelle 3 derart, dass durch die Bewegung der Kurbelwelle 3, aller Pleuel und aller Kolben hervorgerufene Massenkräfte und Massenmomente höherer Ordnung, insbesondere zweiter Ordnung, reduziert oder ausgeglichen werden, wie eingangs beschrieben.

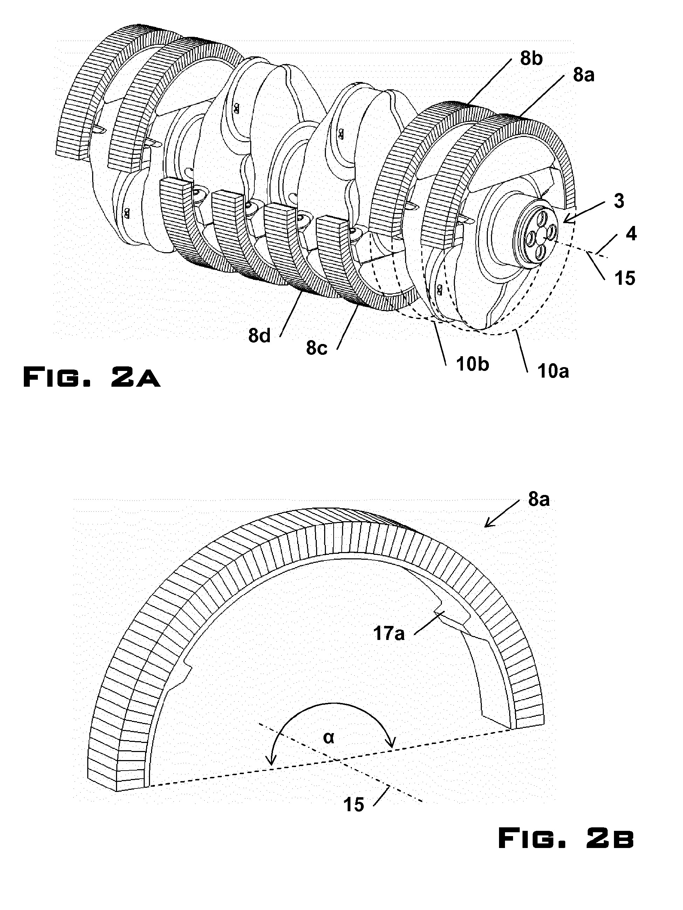

In den Figuren 2a und 2b ist eine erste alternative Ausführungsform der Kurbelwelle 3 dargestellt. Alle inneren Permanentmagneteinheiten 8a, 8b, 8c und 8d weisen anstelle einer der Form eines die jeweilige Kurbelwange 9a, 9b, 9c und 9d umschließenden geschlossenen kreisförmigen inneren Rings, wie bei der ersten Ausführungsform der Figuren 1a bis 1j, in dieser alternativen Ausführungsform die Form eines die jeweilige Kurbelwange umgebenden kreisbogenförmigen inneren Ringabschnitts auf. Dieser offene Ringabschnitt hat eine Halbkreisform mit einer auf der Kurbelwellenachse 4 liegenden geometrischen ersten Achse 15. Somit hat der kreisbogenförmige innere Ringabschnitt einen ersten Mittelpunktswinkel α von 180°, wie in den Figuren 2a und 2b gezeigt. Die inneren Permanentmagneteinheiten 8a und 8b kreisen bei Rotation der Kurbelwelle 3 um die Kurbelwellenachse 4 auf geometrischen ersten Kreisbahnen 10a bzw. 10b, die in der Figur 2a mittels gestrichelter Linien dargestellt sind.

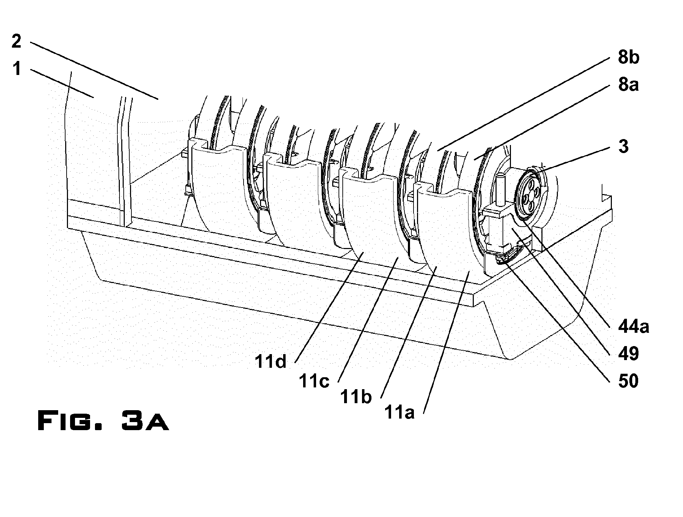

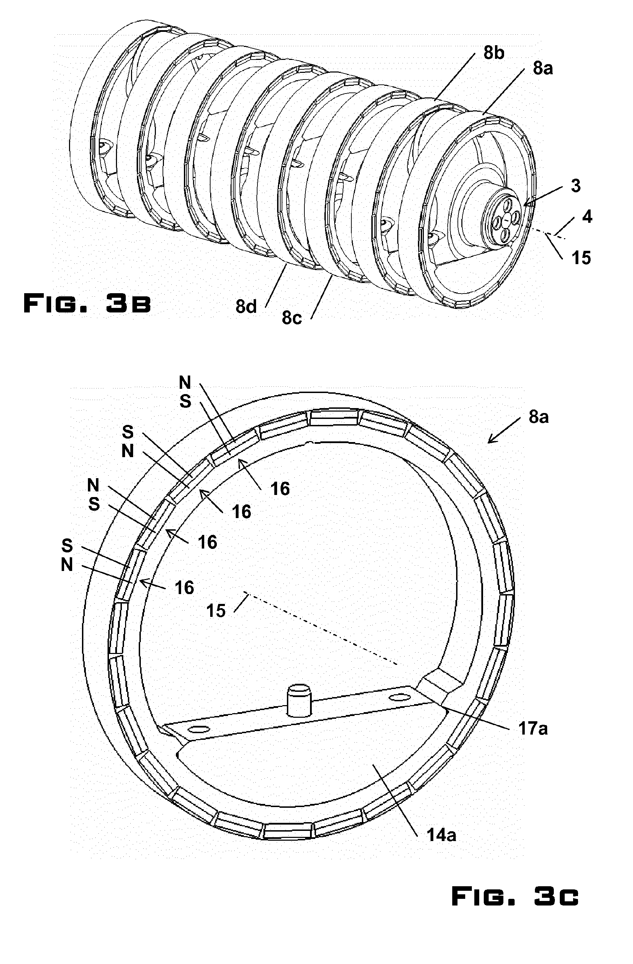

Die Figuren 3a bis 3d zeigen ein zweites Ausführungsbeispiel des erfindungsgemäßen Hubkolbenmotors mit geschlossenen ringförmigen inneren Permanentmagneteinheiten 8a, 8b, 8c und 8d und kreisbogenförmigen äußeren Spuleneinheiten 11a, 11b, 11c und 11d.

Wie auch in dem vorangegangenen ersten Ausführungsbeispiel der Figuren 1a bis 1j sind die inneren Magnetfeldeinheiten permanentmagnetisch und als erste innere Permanentmagneteinheiten 8a, 8b, 8c und 8d ausgebildet. Letztere haben jeweils die Form eines die jeweilige Kurbelwange umschließenden geschlossenen kreisförmigen inneren Rings.

Auch in diesem Ausführungsbeispiel haben die innere Permanentmagneteinheiten 8a, 8b, 8c und 8d bezogen auf die Kurbelwellenachse 4 in Kreisumfangsrichtung derart aneinander gereihte erste Permanentmagnete 16, dass die magnetische Polung der ersten Permanentmagnete 16 in Kreisumfangsrichtung zur Erzeugung eines magnetischen Wechselfeldes bei Rotation der Kurbelwelle 3 alternierend sind. Jedoch unterscheidet sich die Ausrichtung der Permanentmagneten 16 gegenüber den vorangegangenen Ausführungsbeispielen. Bei diesem Ausführungsbeispiel sind die ersten Permanentmagnete 16 entlang des kreisförmigen inneren Ringabschnitts aneinandergrenzend angeordnet und haben in radiale Richtung weisende, abwechselnde magnetische Nordpole N und Südpole S, wie in Figur 3c gezeigt.

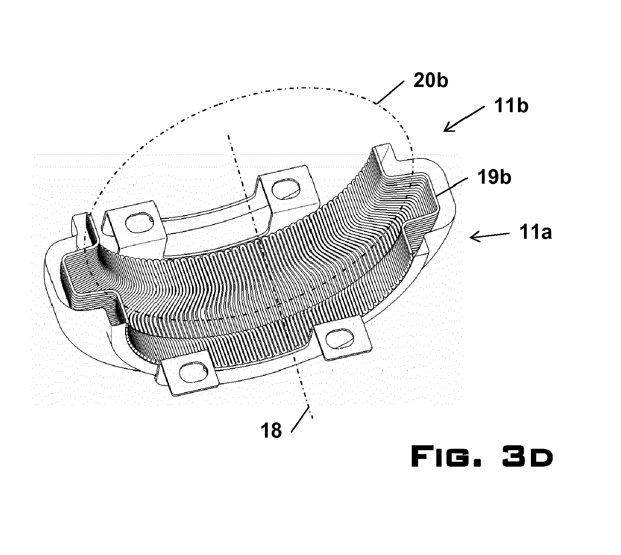

Die äußeren Magnetfeldeinheiten sind elektromagnetisch und als äußere Spuleneinheiten 11a, 11b, 11c und 11d ausgebildet. Sie haben die Form eines die jeweilige Kreisbahn 10a und 10b der inneren Permanentmagneteinheiten 8a und 8b radial beabstandet umgebenden kreisbogenförmigen äußeren Ringabschnitts mit einer auf der Kurbelwellenachse 4 liegenden geometrischen zweiten Achse 18, wobei sich der kreisbogenförmige äußere Ringabschnitt mit einem zweiten Mittelpunktswinkel β von 180° erstreckt, wie in Figur 3d gezeigt.

Die äußeren Spuleneinheiten haben eine sich in Kreisumfangsrichtung erstreckende zweite Spule 19b, deren zweite ringförmige Spulenachse 20b in Kreisumfangsrichtung verläuft, wie in Figur 3d gezeigt. Wie ebenfalls in Figur 3d veranschaulicht sind jeweils zwei äußere Spuleneinheiten 11a und 11b in einem Gehäuse zusammengefasst, wobei die jeweiligen zweiten Spulen 19b der beiden äußere Spuleneinheiten 11a und 11b von einer gemeinsamen, zusammengeführten zweiten Spule 19b gebildet werden.

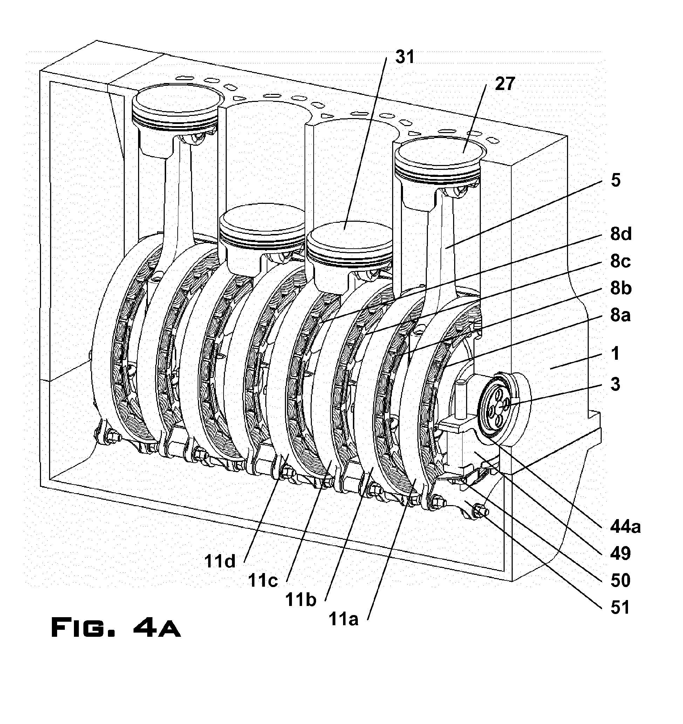

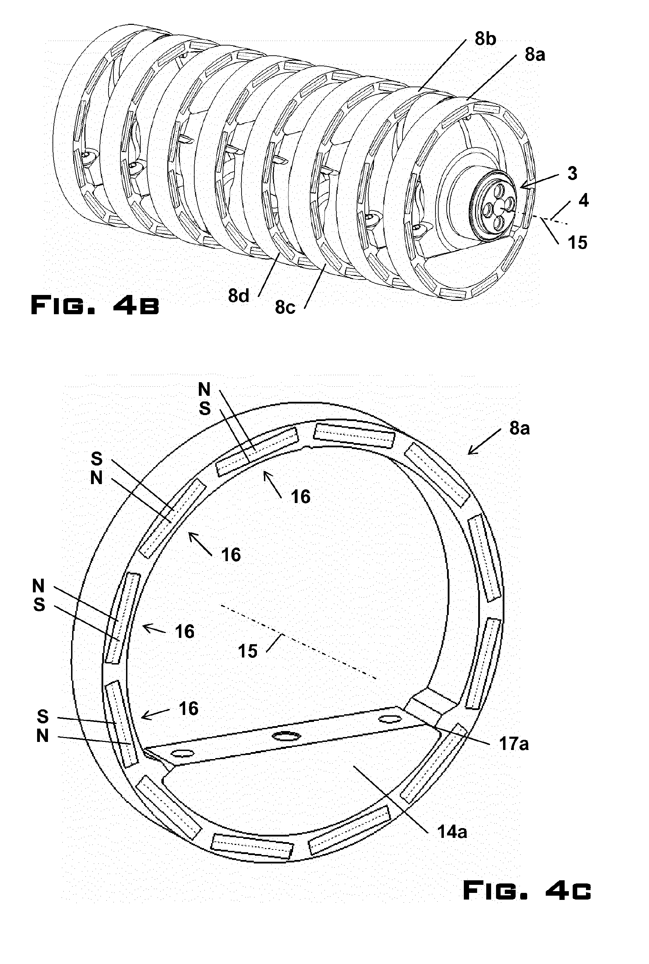

Das in den Figuren 4a bis 4d dargestellte dritte Ausführungsbeispiel des erfindungsgemäßen Hubkolbenmotors hat ebenfalls geschlossene ringförmige inneren Permanentmagneteinheiten 8a, 8b, 8c und 8d mit der geometrischen ersten Achse 15, jedoch weist es geschlossene ringförmige äußere Spuleneinheiten 11a, 11b, 11c und 11d auf.

Wie im zweiten Ausführungsbeispiel aus den Figuren 3a bis 3d haben die innere Permanentmagneteinheiten 8a, 8b, 8c und 8d bezogen auf die Kurbelwellenachse 4 in Kreisumfangsrichtung derart aneinander gereihte erste Permanentmagnete 16, dass die magnetische Polung der ersten Permanentmagnete 16 in Kreisumfangsrichtung zur Erzeugung eines magnetischen Wechselfeldes bei Rotation der Kurbelwelle 3 alternierend sind. Die ersten Permanentmagnete 16 sind entlang des kreisförmigen inneren Ringabschnitts aneinandergrenzend angeordnet und haben in radiale Richtung weisende, abwechselnde magnetische Nordpole N und Südpole S, wie in Figur 4c gezeigt.

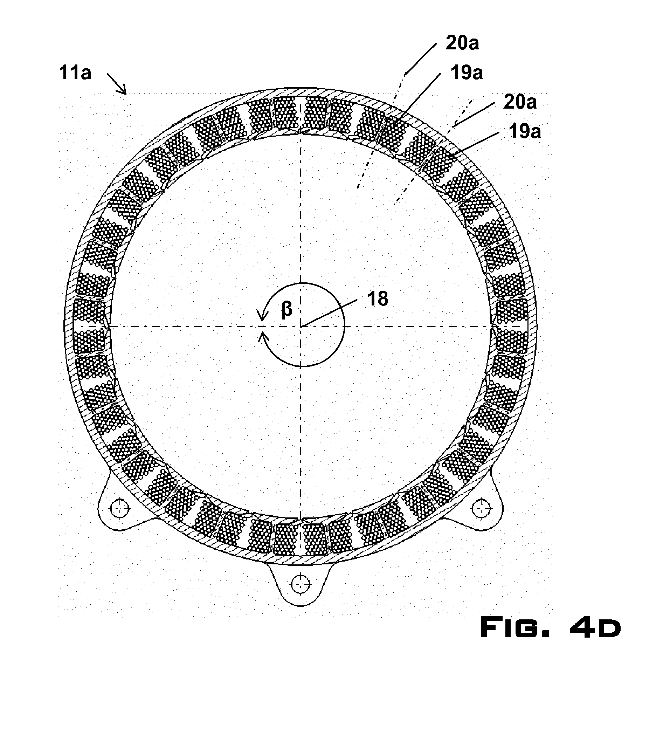

Die äußeren Spuleneinheiten 11a, 11b, 11c und 11d haben die Form eines die jeweilige Kreisbahn 10a und 10b der jeweils inneren Permanentmagneteinheit 8a, 8b, 8c und 8d radial beabstandet umgebenden kreisbogenförmigen äußeren Ringabschnitts mit einer auf der Kurbelwellenachse 4 liegenden geometrischen zweiten Achse 18, wobei sich der kreisbogenförmige äußere Ringabschnitt mit einem zweiten Mittelpunktswinkel β von 360° erstreckt, sodass die äußeren Spuleneinheiten 11a, 11b, 11c und 11d die Form eines die jeweilige Kreisbahn 10a und 10b der jeweiligen inneren Magnetfeldeinheit 8a, 8b, 8c und 8d radial beabstandet umschließenden geschlossenen kreisförmigen äußeren Rings aufweisen, wie in den Figuren 4a und 4d gezeigt.

In Figur 4d ist die erste äußere Spuleneinheiten 11a genauer dargestellt. Sie hat in Kreisumfangsrichtung aneinander gereihte zweite Spulen 19a, deren zweite Spulenachsen 20a in Bezug auf die Kurbelwellenachse 4 radial verlaufen, so dass sie sich in einem gemeinsamen Punkt treffen, der auf der mit der Kurbelwellenachse 4 zusammenfallenden zweiten Achse 18 liegt.

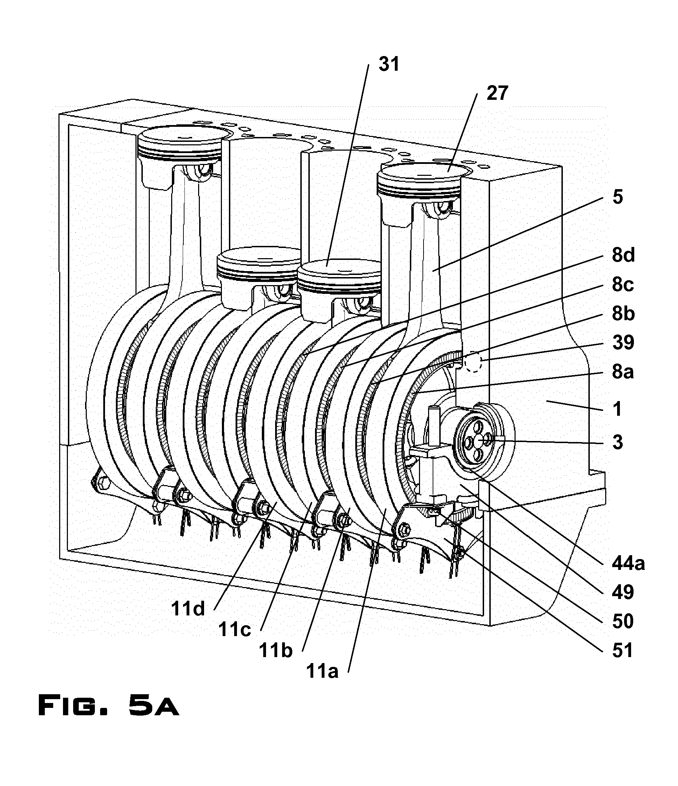

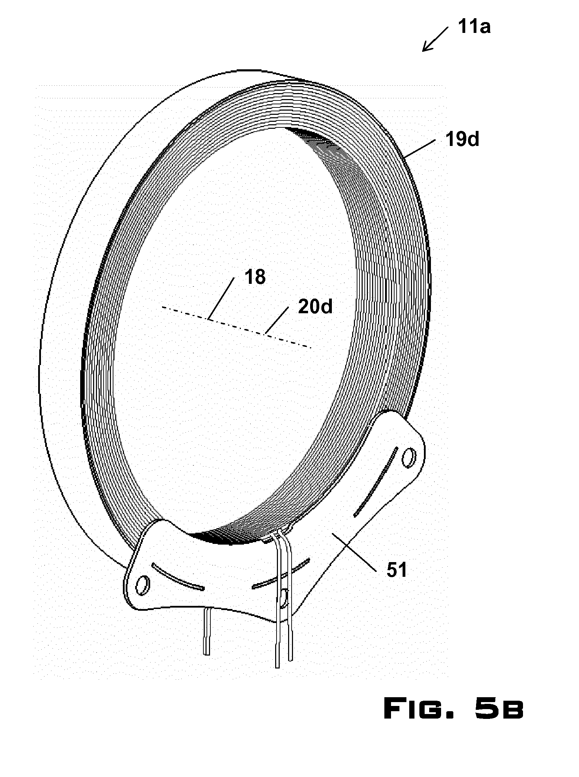

Die Figuren 5a und 5b zeigen ein viertes Ausführungsbeispiel des erfindungsgemäßen Hubkolbenmotors mit geschlossenen ringförmigen inneren Permanentmagneteinheiten 8a, 8b, 8c und 8d, sowie geschlossenen ringförmigen äußeren Spuleneinheiten 11a, 11b, 11c und 11d.

Wie in Figur 5b gezeigt hat die ringförmige erste äußere Spuleneinheit 11a des vierten Ausführungsbeispiels eine zweite Spule 19d mit einer parallel zu der Kurbelwellenachse 4 verlaufenden und auf der zweiten Achse 18 liegenden zweiten Spulenachse 20d. Diese zweite Spule 19d umschließt die innere Permanentmagneteinheit 8a vollständig. Die restlichen inneren Permanentmagneteinheiten und äußeren Spuleneinheiten sind wie die erste innere Permanentmagneteinheit 8a bzw. die erste äußere Spuleneinheit 11a aufgebaut.

Die ringförmige erste äußere Spuleneinheit 11a mit der zweiten Spule 19d hat eine Halterung 51, mit welcher die erste äußere Spuleneinheit 11a direkt an dem Lagerdeckel 49, welcher mittels Lagerdeckelschrauben 50 an dem Zylinderblock 1 fixiert ist, gehalten wird, wie in den Figuren 5a und 5b gezeigt.

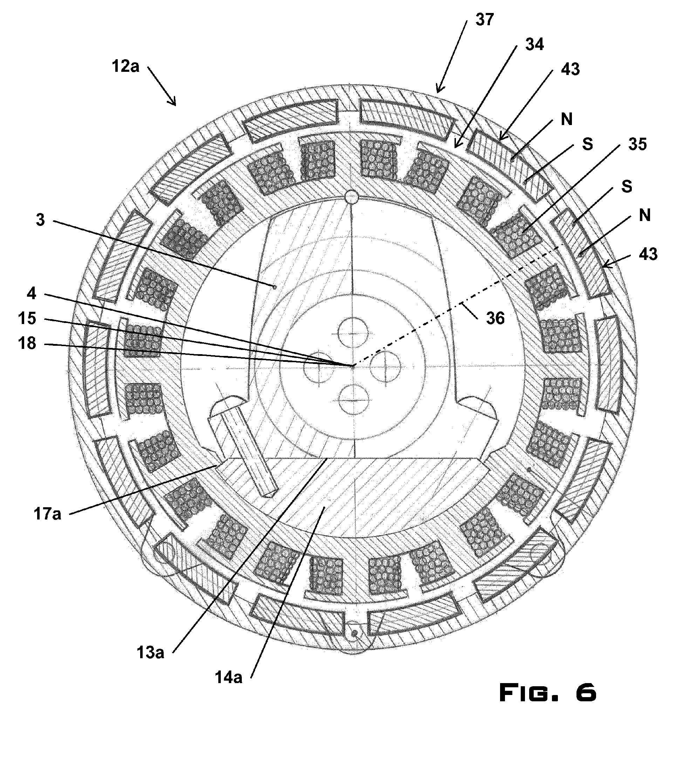

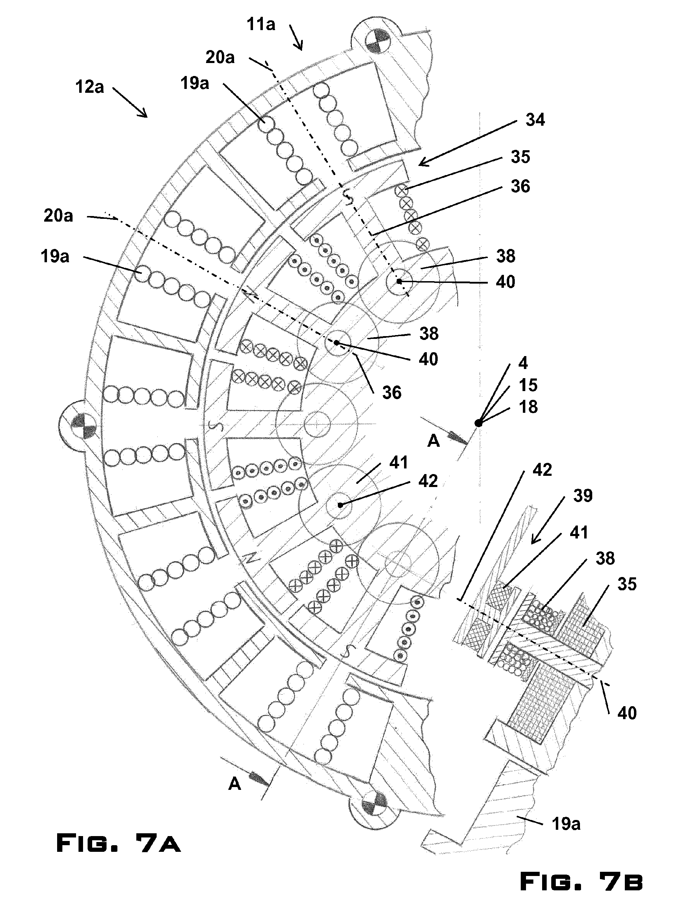

In den vorangehend dargestellten Ausführungsbeispielen werden die innere Magnetfeldeinheit stets von einer inneren Permanentmagneteinheit und die äußere Magnetfeldeinheit stets von einer äußeren Spuleneinheit gebildet. Es ist jedoch auch möglich, dass die innere Magnetfeldeinheit eine innere Spuleneinheit und die äußere Magnetfeldeinheit eine äußere Permanentmagneteinheit, wie in Figur 6 dargestellt, oder eine äußere Spuleneinheit, entsprechend Figur 7, ist.

In Figur 6 ist eine zweite alternative Ausführungsform dargestellt, bei der die erste innere Magnetfeldeinheit, welche die Form eines geschlossenen kreisförmigen inneren Rings mit einer auf der Kurbelwellenachse 4 liegenden ersten Achse 15 aufweist, elektromagnetisch und als erste innere Spuleneinheit 34 ausgebildet ist. Die erste innere Spuleneinheit 34 hat, bezogen auf die Kurbelwellenachse 4, in Kreisumfangsrichtung aneinander gereihte erste Spulen 35, deren erste Spulenachsen 36 in Bezug auf die Kurbelwellenachse 4 radial verlaufen.

Die erste äußere Magnetfeldeinheit hat die Form eines geschlossenen kreisförmigen äußeren Rings mit einer auf der Kurbelwellenachse 4 liegenden zweiten Achse 18, ist permanentmagnetisch und als erste äußere Permanentmagneteinheit 37 ausgebildet. Die erste äußere Permanentmagneteinheit 37 hat, bezogen auf die Kurbelwellenachse 4, in Kreisumfangsrichtung derart aneinander gereihte zweite Permanentmagnete 43, dass die magnetische Polung der zweiten Permanentmagnete 43 in Kreisumfangsrichtung zur Erzeugung eines magnetischen Wechselfeldes bei Rotation der Kurbelwelle 3 alternierend ist. Hierzu sind die zweiten Permanentmagnete 43 entlang des kreisbogenförmigen inneren Ringabschnitts aneinandergrenzend angeordnet und haben in radiale Richtung weisenden Nordpole N und Südpole S, die eine abwechselnde Polungsausrichtung aufweisen.

Die Figuren 7a und 7b zeigen eine dritte alternative Ausführungsform der inneren und äußeren Magnetfeldeinheit. Während bisher entweder die innere oder die äußere Magnetfeldeinheit von einer Permanentmagneteinheit gebildet worden ist, sieht die dritte alternative Ausführungsform vor, dass beide Einheiten Spuleneinheiten sind. Hierdurch kann auf den Einsatz von Permanentmagneten gänzlich verzichtet werden.

Wie auch bei der Ausführungsform von Figur 6 hat die erste innere Magnetfeldeinheit die Form eines geschlossenen kreisförmigen inneren Rings mit einer auf der Kurbelwellenachse 4 liegenden ersten Achse 15. Außerdem ist die erste innere Magnetfeldeinheit elektromagnetisch und als erste innere Spuleneinheit 34 ausgebildet. Die erste innere Spuleneinheit 34 hat, bezogen auf die Kurbelwellenachse 4, in Kreisumfangsrichtung aneinander gereihte erste Spulen 35, deren erste Spulenachsen 36 in Bezug auf die Kurbelwellenachse 4 radial verlaufen und auf der ersten Achse 15 zusammentreffen.

Die ersten Spulen 35 sind derart angeordnet und verschaltet, dass die magnetische Polung, also die Nordpole N und Südpole S, der ersten Spulen 35 in Kreisumfangsrichtung zur Erzeugung eines magnetischen Wechselfeldes bei Rotation der Kurbelwelle 3 alternierend ist.

Die erste äußere Spuleneinheit 11a hat die Form eines die erste innere Spuleneinheit 34 radial beabstandet umgebenden kreisförmigen äußeren Rings mit einer auf der Kurbelwellenachse 4 liegenden geometrischen zweiten Achse 18.

Die erste äußere Spuleneinheit 11a hat in Kreisumfangsrichtung aneinander gereihte zweite Spulen 19a, deren zweite Spulenachsen 20a in Bezug auf die Kurbelwellenachse 4 radial verlaufen, so dass sie sich in einem gemeinsamen Punkt treffen, der auf der mit der Kurbelwellenachse 4 zusammenfallenden zweiten Achse 18 liegt.

Um die erste innere Spuleneinheit 34 mit Spannung zu versorgen, sodass die ersten Spulen 35 in Kreisumfangsrichtung ein magnetisches Wechselfeld bei Rotation der Kurbelwelle 3 erzeugen, weist die erste innere Spuleneinheit 34 elektrisch mit den ersten Spulen 35 verbundene Zusatzspulen 38 auf. Jeder ersten Spule 35 ist hierbei eine Zusatzspule 38 zugeordnet. Die in Kreisumfangsrichtung aneinander gereihten Zusatzspulen 38 haben parallel zu der Kurbelwellenachse 4 verlaufenden Zusatzspulenachsen 40, wie in den Figuren 7a und 7b gezeigt.

Axial benachbart zur ersten Kreisbahn 10a der ersten inneren Spuleneinheit 34 sind elektromagnetische seitliche Magnetfeldeinheiten 39 in der Kurbelkammer 2 feststehend angeordnet, wobei jeder Zusatzspule 38 eine elektromagnetische seitliche Magnetfeldeinheiten 39 zugeordnet ist. Die Anordnung in der Kurbelkammer 2 ist schematisch in der Figur 5a anhand des Bezugszeichens 39 veranschaulicht. Die in Kreisumfangsrichtung aneinander gereihten seitlichen Spulen 41 haben parallel zu der Kurbelwellenachse 4 verlaufende Seitenspulenachsen 42. Die Zusatzspulen 38 und die seitlichen Magnetfeldeinheiten 39 befinden sich, bezogen auf die Kurbelwellenachse 4, in derart axialer Gegenüberlage zueinander und sind derart ausgebildet, dass sie bei Rotation der Kurbelwelle 3 um die Kurbelwellenachse 4 gemeinsam einen elektrischen Generator zur elektrischen Spannungsversorgung der ersten Spulen 35 bilden. Somit bildet die erste innere Spuleneinheit 34 bei Rotation ein Magnetfeld zur Erzeugung einer induzierten Spannung in der ersten äußeren Spuleneinheit 11a.

Die einzelnen Merkmale der dargestellten Ausführungsbeispiele und Ausführungsformen können erfindungsgemäß frei kombiniert werden.

## Patentansprüche

1. Hubkolbenmotor mit
• einem Zylinderblock (1),
• einer Kurbelkammer (2), die zumindest teilweise in dem Zylinderblock (1) ausgeformt ist,
• einer Kurbelwelle (3), die aus einem magnetisierbaren oder nichtmagnetisierbaren Werkstoff besteht und innerhalb der Kurbelkammer (2) um eine geometrische Kurbelwellenachse (4) rotierbar angeordnet ist,
• mindestens einem ersten Pleuel (5), der drehbar in einem ersten Pleuellager (6) der Kurbelwelle (3) gelagert ist und bei Rotation der Kurbelwelle (3) eine Pleuelbewegung in einem geometrischen Pleuelbewegungsraum (7) durchführt,
• einer ersten inneren Magnetfeldeinheit (8a; 34), die an einer zu dem ersten Pleuellager (6) bezogen auf die Kurbelwellenachse (4) axial benachbarten ersten Kurbelwange (9a) der Kurbelwelle (3) derart angeordnet ist, dass die erste innere Magnetfeldeinheit (8a; 34) in Bezug auf die Kurbelwellenachse (4) radial nach außen weist und bei Rotation der Kurbelwelle (3) um die Kurbelwellenachse (4) auf einer zu dem Pleuelbewegungsraum (7) axial benachbarten geometrischen ersten Kreisbahn (10a) kreist, und
• einer ersten äußeren Magnetfeldeinheit (11a; 37), die in der Kurbelkammer (2) radial beabstandet zur ersten Kreisbahn (10a) feststehend angeordnet ist,
wobei die erste innere Magnetfeldeinheit (8a; 34) und die erste äußere Magnetfeldeinheit (11a; 37) derart angeordnet und ausgebildet sind, dass sie gemeinsam einen ersten elektromechanischen Wandler (12a), insbesondere einen Elektromotor oder einen elektrischen Generator, bilden,
**dadurch gekennzeichnet, dass**
• die erste Kurbelwange (9a)
- einstückig mit einem ersten Ausgleichsgewicht (14a) ausgebildet ist oder
- auf einer in Bezug zu der Kurbelwellenachse (4) radial nach außen weisenden und dem ersten Pleuellager (6) gegenüberliegenden Seite eine erste Befestigungsfläche (13a) aufweist, wobei ein erstes Ausgleichsgewicht (14a) an der ersten Befestigungsfläche (13a) in radiale Richtung formschlüssig fixiert ist und das erste Ausgleichsgewicht (14a) aus einem magnetisierbaren oder nichtmagnetisierbaren Werkstoff besteht,
• die erste innere Magnetfeldeinheit (8a; 34) auf einer in Bezug zu der Kurbelwellenachse (4) radial nach außen weisenden Seite des ersten Ausgleichsgewichts (14a) angeordnet ist,
• die erste innere Magnetfeldeinheit (8a; 34) die Form eines die erste Kurbelwange (9a) umgebenden kreisbogenförmigen inneren Ringabschnitts mit einer im Wesentlichen auf der Kurbelwellenachse (4) liegenden geometrischen ersten Achse (15) aufweist und
• sich der kreisbogenförmige innere Ringabschnitt mit einem ersten Mittelpunktswinkel (α) von über 135° erstreckt.

2. Hubkolbenmotor nach Anspruch 1,
**dadurch gekennzeichnet, dass**
sich der kreisbogenförmige innere Ringabschnitt mit einem ersten Mittelpunktswinkel (α) von über 180°, insbesondere über 210°, erstreckt.

3. Hubkolbenmotor nach Anspruch 1 oder 2,
**dadurch gekennzeichnet, dass**
der erste Mittelpunktswinkel (α) mindestens 60°, insbesondere mindestens 90°, insbesondere mindestens 120° größer ist als der Mittelpunktswinkel der Umfangserstreckung des Ausgleichsgewichts (14a).

4. Hubkolbenmotor nach einem der Ansprüche 1 bis 3,
**dadurch gekennzeichnet, dass**
der kreisbogenförmige innere Ringabschnitt ein- oder beidseitig um mindestens 30°, insbesondere mindestens 60°, insbesondere mindestens 90° über das erste Ausgleichsgewicht (14a) in Umfangsrichtung hinausragt.

5. Hubkolbenmotor nach einem der Ansprüche 1 bis 4,
**dadurch gekennzeichnet, dass**
die erste innere Magnetfeldeinheit (8a; 34) in eine sich in axiale Richtung erstreckende erste Linearführung (17a), welche die erste innere Magnetfeldeinheit (8a; 34) bezogen auf die Kurbelwellenachse (4) in radiale Richtung und Umfangsrichtung formschlüssig fixiert, auf dem ersten Ausgleichsgewicht (14a) aufgeschoben und dort axial fixiert ist.

6. Hubkolbenmotor nach einem der Ansprüche 1 bis 5,
**dadurch gekennzeichnet, dass**
• sich der kreisbogenförmige innere Ringabschnitt mit einem ersten Mittelpunktswinkel (α) von 360° erstreckt und
• die erste innere Magnetfeldeinheit (8a; 34) die Form eines die erste Kurbelwange (9a) umschließenden geschlossenen kreisförmigen inneren Rings aufweist.

7. Hubkolbenmotor nach einem der Ansprüche 1 bis 6,
**dadurch gekennzeichnet, dass**
• die erste äußere Magnetfeldeinheit (11a; 37) die Form eines die erste Kreisbahn (10a) der ersten inneren Magnetfeldeinheit (8a; 34) radial beabstandet umgebenden kreisbogenförmigen äußeren Ringabschnitts mit einer auf der Kurbelwellenachse (4) liegenden geometrischen zweiten Achse (18) aufweist und
• insbesondere sich der kreisbogenförmige äußere Ringabschnitt mit einem zweiten Mittelpunktswinkel (β) von über 135° erstreckt.

8. Hubkolbenmotor nach Anspruch 7,
**dadurch gekennzeichnet, dass**
• sich der kreisbogenförmige äußere Ringabschnitt mit einem zweiten Mittelpunktswinkel (β) von 360° erstreckt und
• die erste äußere Magnetfeldeinheit (11a; 37) die Form eines die erste Kreisbahn (10a) der ersten inneren Magnetfeldeinheit (8a; 34) radial beabstandet umschließenden geschlossenen kreisförmigen äußeren Rings aufweist.

9. Hubkolbenmotor nach einem der Ansprüche 1 bis 8,
**dadurch gekennzeichnet, dass**
die erste innere Magnetfeldeinheit
• permanentmagnetisch ist und
• als erste innere Permanentmagneteinheit (8a) ausgebildet ist.

10. Hubkolbenmotor nach Anspruch 9,
**dadurch gekennzeichnet, dass**
die erste innere Permanentmagneteinheit (8a) bezogen auf die Kurbelwellenachse (4) in Kreisumfangsrichtung derart aneinander gereihte erste Permanentmagnete (16) aufweist, dass die magnetische Polung der ersten Permanentmagnete (16) in Kreisumfangsrichtung zur Erzeugung eines magnetischen Wechselfeldes bei Rotation der Kurbelwelle (3) alternierend ist, insbesondere wobei
• die ersten Permanentmagnete (16), insbesondere entlang des kreisbogenförmigen inneren Ringabschnitts, aneinandergrenzend angeordnet sind und in eine gemeinsame Umfangsrichtung weisende Nordpole (N) aufweisen oder
• die ersten Permanentmagnete (16), insbesondere entlang des kreisbogenförmigen inneren Ringabschnitts, aneinandergrenzend angeordnet sind und in radiale Richtung weisenden Pole (N, S) mit abwechselnder Polungsausrichtung aufweisen.

11. Hubkolbenmotor nach einem der Ansprüche 1 bis 8,
**dadurch gekennzeichnet, dass**
die erste innere Magnetfeldeinheit
• elektromagnetisch ist und
• als erste innere Spuleneinheit (34) ausgebildet ist.

12. Hubkolbenmotor nach Anspruch 11,
**dadurch gekennzeichnet, dass**
die erste innere Spuleneinheit (34)
• bezogen auf die Kurbelwellenachse (4) in Kreisumfangsrichtung aneinander gereihte erste Spulen (35), deren erste Spulenachsen (36) in Bezug auf die Kurbelwellenachse (4) radial verlaufen, insbesondere wobei die ersten Spulen (35) derart angeordnet und/oder verschaltet sind, dass die magnetische Polung der ersten Spulen (35) in Kreisumfangsrichtung zur Erzeugung eines magnetischen Wechselfeldes bei Rotation der Kurbelwelle (3) alternierend ist, oder
• mindestens eine sich in Kreisumfangsrichtung erstreckende erste Spule, deren erste Spulenachse in Kreisumfangsrichtung verläuft, oder
• mindestens eine erste Spule, deren erste Spulenachse parallel zu der Kurbelwellenachse (4) verläuft,
aufweist.

13. Hubkolbenmotor nach Anspruch 12,
**dadurch gekennzeichnet, dass**
• die erste inneren Spuleneinheit (34) mindestens eine elektrisch mit der mindestens einen ersten Spule (35) verbundene Zusatzspule (38) aufweist,
• eine permanentmagnetische oder elektromagnetische seitliche Magnetfeldeinheit (39) in der Kurbelkammer (2) axial benachbart zur ersten Kreisbahn (10a) der erste inneren Spuleneinheit (34) feststehend angeordnet ist und
• die mindestens eine Zusatzspule (38) und die seitliche Magnetfeldeinheit (39) derart zueinander, insbesondere bezogen auf die Kurbelwellenachse (4) in derart axialer Gegenüberlage zueinander, angeordnet und derart ausgebildet sind, dass sie bei Rotation der Kurbelwelle (3) um die Kurbelwellenachse (4) gemeinsam einen elektrischen Generator zur elektrischen Spannungsversorgung der mindestens einen ersten Spule (35) bilden.

14. Hubkolbenmotor nach Anspruch 13,
**dadurch gekennzeichnet, dass**
• die mindestens eine Zusatzspule (38) eine parallel zu der Kurbelwellenachse (4) verlaufende Zusatzspulenachse (40) aufweist oder
• die mindestens eine Zusatzspule (38) von mehreren in Kreisumfangsrichtung aneinander gereihten Zusatzspulen (38), insbesondere mit parallel zu der Kurbelwellenachse (4) verlaufenden Zusatzspulenachsen (40), gebildet wird,
insbesondere wobei die seitliche Magnetfeldeinheit (39) elektromagnetisch ist und von mehreren in Kreisumfangsrichtung aneinander gereihten seitlichen Spulen (41), insbesondere mit parallel zu der Kurbelwellenachse (4) verlaufenden Seitenspulenachsen (42), gebildet wird.

15. Hubkolbenmotor nach einem der Ansprüche 1 bis 14,
**dadurch gekennzeichnet, dass**
die erste äußere Magnetfeldeinheit
• elektromagnetisch ist und
• als erste äußere Spuleneinheit (11a) ausgebildet ist.

16. Hubkolbenmotor nach Anspruch 15,
**dadurch gekennzeichnet, dass**
die erste äußere Spuleneinheit (11a)
• in Kreisumfangsrichtung aneinander gereihte zweite Spulen (19a), deren zweite Spulenachsen (20a) in Bezug auf die Kurbelwellenachse (4) radial verlaufen, oder
• mindestens eine sich in Kreisumfangsrichtung erstreckende zweite Spule (19b), deren zweite Spulenachse (20b) in Kreisumfangsrichtung verläuft, oder
• mindestens eine zweite Spule (19c; 19d), deren zweite Spulenachse (20c; 20d) parallel zu der Kurbelwellenachse (4) verläuft,
aufweist.

17. Hubkolbenmotor nach Anspruch 11 oder 12,
**dadurch gekennzeichnet, dass**
die erste äußere Magnetfeldeinheit
• permanentmagnetisch ist und
• als erste äußere Permanentmagneteinheit (37) ausgebildet ist.

18. Hubkolbenmotor nach Anspruch 17,
**dadurch gekennzeichnet, dass**
die erste äußere Permanentmagneteinheit (37) bezogen auf die Kurbelwellenachse (4) in Kreisumfangsrichtung derart aneinander gereihte zweite Permanentmagnete (43) aufweist, dass die magnetische Polung der zweiten Permanentmagnete (43) in Kreisumfangsrichtung zur Erzeugung eines magnetischen Wechselfeldes bei Rotation der Kurbelwelle (3) alternierend ist, insbesondere wobei
• die zweiten Permanentmagnete (43) entlang des kreisbogenförmigen inneren Ringabschnitts aneinandergrenzend angeordnet sind und in eine gemeinsame Umfangsrichtung weisenden Nordpole (N) aufweisen oder
• die zweiten Permanentmagnete (43) entlang des kreisbogenförmigen inneren Ringabschnitts aneinandergrenzend angeordnet sind und in radiale Richtung weisenden Pole (N, S) mit abwechselnder Polungsausrichtung aufweisen.

19. Hubkolbenmotor nach einem der Ansprüche 1 bis 18,
**gekennzeichnet durch**
• eine zweite innere Magnetfeldeinheit (8b), die an einer zu dem ersten Pleuellager (6) axial benachbarten und der ersten Kurbelwange (9a) axial gegenüberliegenden zweiten Kurbelwange (9b) der Kurbelwelle (3) derart angeordnet ist, dass die zweite innere Magnetfeldeinheit (8b) in Bezug auf die Kurbelwellenachse (4) radial nach außen weist und bei Rotation der Kurbelwelle (3) um die Kurbelwellenachse (4) auf einer zu dem Pleuelbewegungsraum (7) axial benachbarten geometrischen zweiten Kreisbahn (10b) kreist, und
• einer zweiten äußeren Magnetfeldeinheit (11b), die in der Kurbelkammer (2) derart radial beabstandet zur zweiten Kreisbahn (10b) feststehend angeordnet ist, dass die zweite äußere Magnetfeldeinheit (11b) und die zweite innere Magnetfeldeinheit (8b) gemeinsam einen zweiten elektromechanischen Wandler (12b) bilden, wobei
• sich in einem axialen Zwischenraum zwischen der ersten Kreisbahn (10a) und der zweiten Kreisbahn (10b) der Pleuelbewegungsraum (7) des mindestens einen ersten Pleuels (5) erstreckt,
• die zweite Kurbelwange (9b)
- einstückig mit einem zweiten Ausgleichsgewicht (14b) ausgebildet ist oder
- auf einer in Bezug zu der Kurbelwellenachse (4) radial nach außen weisenden und dem ersten Pleuellager (6) gegenüberliegenden Seite eine zweite Befestigungsfläche (13b) aufweist, wobei ein zweites Ausgleichsgewicht (14b) an der zweiten Befestigungsfläche (13b) in radiale Richtung formschlüssig fixiert ist und das zweite Ausgleichsgewicht (14b) aus einem magnetisierbaren oder nichtmagnetisierbaren Werkstoff besteht,
• die zweite innere Magnetfeldeinheit (8b) auf einer radial nach außen weisenden Seite des zweiten Ausgleichsgewichts (14b) angeordnet ist,
• die zweite innere Magnetfeldeinheit (8b) die Form eines die erste Kurbelwange (9a) umgebenden kreisbogenförmigen inneren Ringabschnitts mit einer im Wesentlichen auf der Kurbelwellenachse (4) liegenden geometrischen ersten Achse (15) aufweist und
• sich der kreisbogenförmige innere Ringabschnitt mit einem ersten Mittelpunktswinkel (α) von über 135° erstreckt,
insbesondere wobei
• die zweite innere Magnetfeldeinheit (8b) der ersten innere Magnetfeldeinheit (8a), und/oder
• die zweiten äußere Magnetfeldeinheit (11b) der ersten äußere Magnetfeldeinheit (11a) und/oder
• das zweite Ausgleichsgewicht (14b) dem ersten Ausgleichsgewicht (14a)
entspricht.

20. System aus
• dem Hubkolbenmotor nach einem der Ansprüche 1 bis 19,
• einem aufladbaren und entladbaren elektrischen Energiespeicher (21),
• einer elektrischen Steuerungseinheit (22) und
• einem Kurbelwellensensor (23) zur Erfassung einer Position der Kurbelwelle (3),
wobei
• die Steuerungseinheit (22) derart mit dem elektrischen Energiespeicher (21), dem ersten elektromechanischen Wandler (12a) und insbesondere dem zweiten elektromechanischen Wandler (12b) elektrisch verschaltet und derart ausgebildet ist, dass der Hubkolbenmotor zwischen
- einer Elektromotorbetriebsart, in welcher die Kurbelwelle (3) durch Entladen des elektrischen Energiespeichers (21) elektromotorisch antreibbar ist, und
- einer Generatorbetriebsart, in welcher der elektrischen Energiespeicher (21) durch mechanisches Antreiben der Kurbelwelle (3), insbesondere durch verbrennungsmotorisches Antreiben der Kurbelwelle (3) mittels des Hubkolbenmotors, aufladbar ist, umschaltbar ist und
• der Hubkolbenmotor einen derart ausgebildeten elektrisch ansteuerbaren variablen Auslassventiltrieb (24) für mindestens ein erstes Auslassventil (25), das einem ersten Verbrennungsraum (26) eines mit dem mindestens einen ersten Pleuel (5) gekoppelten ersten Kolben (27) zugeordnet ist, aufweist, dass das mindestens eine erste Auslassventil (25) unabhängig von der Stellung der Kurbelwelle (3) öffenbar ist,
**dadurch gekennzeichnet, dass**
die Steuerungseinheit (22) derart mit dem Kurbelwellensensor (23) und dem variablen Auslassventiltrieb (24) verschaltet und derart ausgebildet ist, dass das mindestens eine erste Auslassventil (25) in der Elektromotorbetriebsart in einem Positionsbereich (28) der Kurbelwelle (3), in welchem sich der erste Kolben (27) in einen Verdichtungstakt (29) befindet, geöffnet ist.

21. System, insbesondere nach dem Anspruch 20, aus
• dem Hubkolbenmotor nach einem der Ansprüche 1 bis 19,
• einem aufladbaren oder entladbaren elektrischen Energiespeicher (21),
• einem elektrischen Leistungsstellglied (30) und
• einem Kurbelwellensensor (23) zur Erfassung einer Position der Kurbelwelle (3),
wobei
• der Hubkolbenmotor
- einen ersten Kolben (27), dem der erste elektromechanische Wandler (12a) und insbesondere der zweite elektromechanische Wandler (12b) zugeordnet und der mit dem mindestens einen ersten Pleuel (5) gekoppelt ist, und
- einen zweiten Kolben (31), dem ein dritter elektromechanischer Wandler (12c), der insbesondere dem ersten elektromechanischen Wandler (12a) entspricht, zugeordnet und der mit mindestens einem zweiten Pleuel (32), der drehbar in einem zweiten Pleuellager (33) der Kurbelwelle (3) gelagert ist, gekoppelt ist,
aufweist und
• das Leistungsstellglied (30) derart mit dem elektrischen Energiespeicher (21), dem ersten elektromechanischen Wandler (12a) und dem dritten elektromechanischen Wandler (12c) elektrisch verschaltet und derart ausgebildet ist, dass
- in einer Elektromotorbetriebsart die Kurbelwelle (3) durch Entladen des elektrischen Energiespeichers (21) elektromotorisch mit einstellbarer Leistung antreibbar ist oder
- in einer Generatorbetriebsart der elektrische Energiespeicher (21) durch mechanisches Antreiben der Kurbelwelle (3), insbesondere durch verbrennungsmotorisches Antreiben der Kurbelwelle (3) mittels des Hubkolbenmotors, mit einstellbarerer Leistung aufladbar ist,
**dadurch gekennzeichnet, dass**
das Leistungsstellglied (30) derart mit dem elektrischen Energiespeicher (21), dem ersten elektromechanischen Wandler (12a), dem dritten elektromechanischen Wandler (12c) und dem Kurbelwellensensor (23) elektrisch verschaltet und derart ausgebildet, dass
• die Leistung auf den ersten elektromechanischen Wandler (12a) mit einem ersten Leistungsanteil und den dritten elektromechanischen Wandler (12c) mit einem zweiten Leistungsanteil verteilt ist,
• das Verteilen der Leistung auf den ersten elektromechanischen Wandler (12a) und den dritten elektromechanischen Wandler (12c) in Abhängigkeit von der Position der Kurbelwelle (3) erfolgt und
• insbesondere das Verteilen der Leistung in Abhängigkeit von der Position der Kurbelwelle (3) derart erfolgt, dass durch die Bewegung der Kurbelwelle (3), des mindestens einen ersten Pleuels (5), des mindestens einen zweiten Pleuels (32), des ersten Kolbens (27) und/oder des zweiten Kolbens (31) hervorgerufene Massenkräfte und -momente höherer Ordnung, insbesondere zweiter Ordnung, reduziert oder ausgeglichen sind.
